(19) Europäisches Patentamt
European Patent Office
Office européen des brevets

(11) Numéro de publication: **0 403 366 B1**

(12) # FASCICULE DE BREVET EUROPEEN

(45) Date de publication de fascicule du brevet: **22.02.95**

(51) Int. Cl.$^6$: **C08B 37/16**

(21) Numéro de dépôt: **90401620.1**

(22) Date de dépôt: **12.06.90**

Le dossier contient des informations techniques présentées postérieurement au dépôt de la demande et ne figurant pas dans le présent fascicule.

(54) **Dérivés de cyclomalto-oligosaccharides et leurs procédés de préparation.**

(30) Priorité: **14.06.89 FR 8907876**

(43) Date de publication de la demande:
**19.12.90 Bulletin 90/51**

(45) Mention de la délivrance du brevet:
**22.02.95 Bulletin 95/08**

(84) Etats contractants désignés:
**BE DE GB IT**

(56) Documents cités:
**DE-A- 3 710 569**

**JOURNAL OF AMERICAN CHEMICAL SOCIETY, vol. 102, no. 3, 30 janvier 1980, pages1161-1163; K. FUJITA et al.: "Hydrolysis of phenyl acetates with capped beta-cyclodextrins: reversion from meta to para selectivity"**

(73) Titulaire: **COMMISSARIAT A L'ENERGIE ATOMIOUE**
**31/33, rue de la Fédération**
**F-75015 Paris Cédex 15 (FR)**

Titulaire: **UNIVERSITY COLLEGE DUBLIN**
**Belfield**
**Dublin 4 (IE)**

Titulaire: **Darcy, Raphael Dr**
**58 Clonard Drive**
**Dublin 16 (IE)**

(72) Inventeur: **Darcy, Raphael**
**58, Clonard Drive**
**Dublin 16 (IE)**
Inventeur: **Defaye, Jacques**
**202, Chemin du Vercors**
**F-38330 Saint-Ismier (FR)**
Inventeur: **Gadelle, Andrée**
**28 Hameau Fleuri,**
**Montbonnot-Saint-Martin**
**F-38330 Saint-Ismier (FR)**
Inventeur: **Guillet, Alain**
**6 Chemin du Signal**
**F-69110 Sainte Foy les Lyon (FR)**
Inventeur: **O'Sullivan, Thomas**
**c/o University College Dublin**
**Belfield,**
**Dublin 4 (IE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

(74) Mandataire: **Mongrédien, André et al**
**c/o BREVATOME**
**25, rue de Ponthieu**
**F-75008 Paris (FR)**

## Description

La présente invention concerne de nouveaux dérivés de cyclomalto-oligosaccharides et leurs procédés de préparation.

De façon plus précise, elle concerne des dérivés de cyclomalto-oligosaccharides ramifiés obtenus en fixant sur au moins un des carbones en position 6 de l'oligosaccharide cyclique un résidu osidique ou un résidu oligosaccharidique par l'intermédiaire d'un atome de soufre.

Les cyclomalto-oligosaccharides, plus couramment appelés cyclodextrines, sont des oligosaccharides cycliques du D-glucose comportant le plus communément de six à huit unités D-glucopyranosyle liées par des enchaînements $\alpha$-(1 → 4), ce qui leur confère une morphologie de type torique. Du fait de cette géométrie moléculaire et des structures électroniques afférentes, un caractère hydrophobe est associé à la cavité interne du cycle alors que la surface externe de la molécule est hydrophile. Cette disposition favorise la formation de complexes d'inclusion avec des molécules hydrophobes par association apolaire, améliorant ainsi la solubilisation de ces molécules dans l'eau. Ces propriétés sont très largement exploitées dans beaucoup de domaines tels que les domaines pharmaceutique, vétérinaire, agrochimique, alimentaire et cosmétique incluant les arômes et parfums. Les cyclodextrines sont ainsi utilisées pour stabiliser des molécules labiles, améliorer le transport moléculaire vers des sites cibles, ou encore favoriser des réactions d'interfaces, comme il est décrit dans Drug Development and Industrial Pharmacy, 12 11-13, p. 2193-2216, 1986.

On sait que la solubilité des cyclomalto-oligosaccharides dans l'eau, mais également dans les solvants non aqueux, et par voie de conséquence celle de leurs produits d'inclusion, est notablement augmentée lorsque la molécule est substituée par des groupements hydrophiles. C'est le cas en particulier des cyclomalto-oligosaccharides ramifiés, qui comportent un ou plusieurs substituants $\alpha$-D-glucopyranosyle, $\alpha$-maltosyle ou encore un ou plusieurs substituants homologues supérieurs oligosaccharidiques en position C-6 hydroxyméthyle de l'oligosaccharide cyclique.

Ces cyclomalto-oligosaccharides ramifiés peuvent être préparés par des techniques faisant appel à l'enzymologie, à la synthèse chimique ou à une combinaison des deux.

Ainsi, il est décrit par Kobayashi et al dans Proc. 1st Int. Symp. on Cyclodextrins, Budapest, 1981, p. 51 à 60, un procédé de préparation de glucosyl-cyclodextrines par action de Bacillus macerans cyclomaltodextrine glucanotransférase sur l'amidon. On connaît aussi par les documents GB-A-2 165 549 et Chemical Abstracts, vol. 107, 1987, p. 603, n° 107:57465n (JP-A- 6206696 (8706696), des procédés de préparation de cyclodextrines ramifiées à partir de cyclodextrines et de glucose d'un maltooligosaccharide, ou encore des fluorures de glycosyle correspondant utilisant la pullulanase comme catalyseur pour la réaction de transfert du glucose ou du malto-oligosaccharide.

Dans les procédés décrits ci-dessus, on obtient un mélange de cyclodextrines diversement ramifiées et la purification de ces composés, réalisée à l'échelle du laboratoire est longue et difficile, si bien que ces produits sont généralement commercialisés sous la forme de mélanges.

Les procédés de synthèse, uniquement par voie chimique, utilisant par exemple la glycosylation d'un dérivé partiellement protégé d'un cyclomalto-oligosaccharide par un dérivé benzylé d'un glucopyranose convenablement activé, comme il est décrit par Fügedi et al dans Carbohydr. Res., 175 (1988), 173-181, permettent d'éviter cet inconvénient car ils conduisent à des produits purs et homogènes. Cependant, ils nécessitent un nombre important d'étapes et les rendements en produits sont faibles.

La présente invention a pour objet de nouveaux dérivés de cyclomalto-oligosaccharides ramifiés qui peuvent être préparés de façon plus simple, sous la forme de produits purs, et qui présentent les mêmes avantages que les cyclomalto-oligosaccharides ramifiés divulgués par les documents précités.

Selon l'invention, les nouveaux dérivés de cyclomalto-oligosaccharides répondent à la formule :

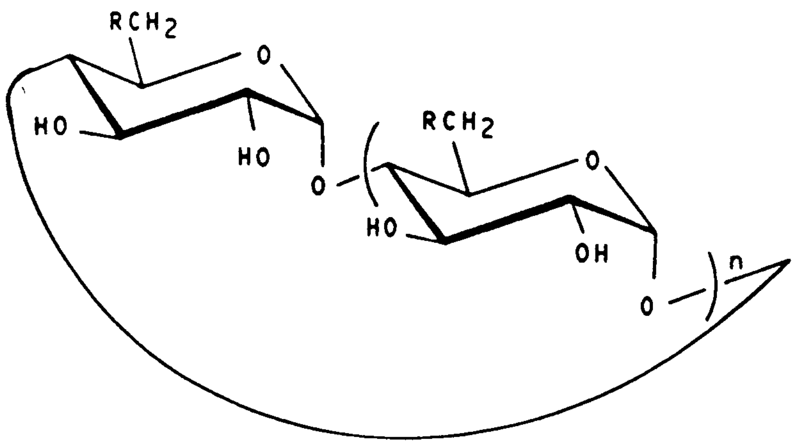

(I)

dans laquelle n est un nombre entier de 3 à 10, les R qui peuvent être identiques ou différents, représentent OH ou ZY avec Z représentant une simple liaison ou un radical divalent de formule $-S-(CH_2)_m-$ dans laquelle m est un nombre entier de 1 à 20 ou de formule $-S-(CH_2)_q-CH=CH-(CH_2)_r-$ dans laquelle q et r sont tels que $1 \leqq q \leqq 17$, $1 \leqq r \leqq 17$ avec $q+r \leqq 18$ avec S étant relié à $CH_2$, et Y représentant un radical de formule :

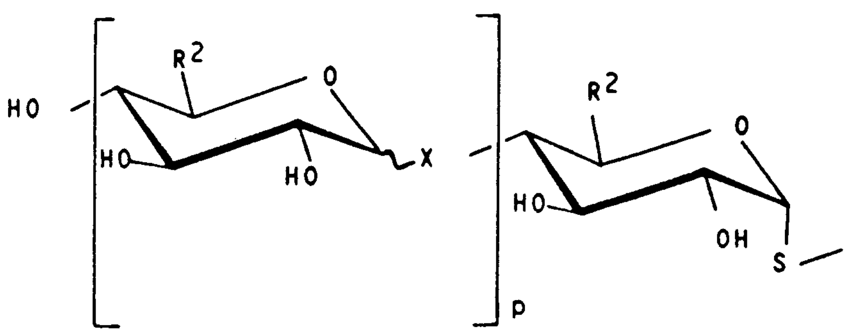

(II)

ou de formule

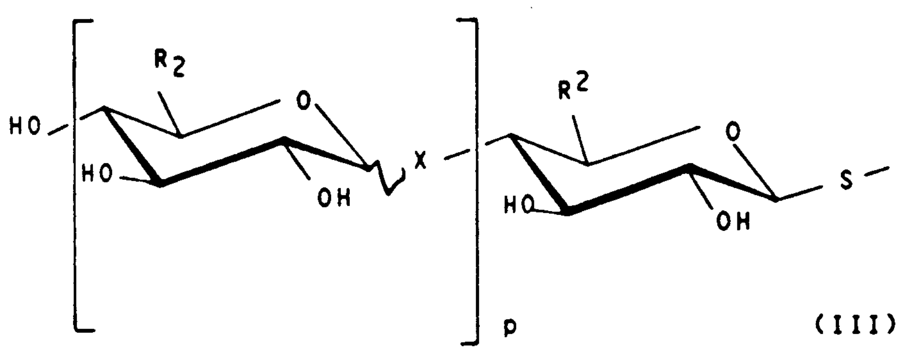

(III)

dans lesquelles $R^2$ représente H ou $CH_2OH$, p est égal à 0 ou est un nombre entier de 1 à 9, le(s) X qui peuvent être différents, représentent O, S ou un radical répondant aux formules :

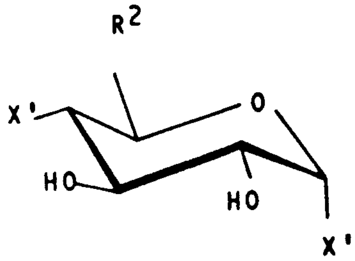 (IV) ou 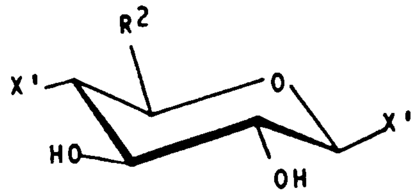 (V)

dans lesquelles les X' qui peuvent être identiques ou différents, représentent O ou S, et $R^2$ a la signification donnée ci-dessus, à condition que l'un au moins des R représente ZY.

Ces nouveaux dérivés se différencient ainsi des cyclodextrines ramifiées connues par le fait que le substituant hydrophile qui est un résidu glycosyle ou oligoglycosyle est fixé sur le cycle par l'intermédiaire d'un atome de soufre. Ceci constitue un avantage important car les thioglycoses sont de bien meilleurs réactifs nucléophiles que les glycoses correspondants lorsqu'ils sont engagés dans des réactions de couplage impliquant des sites électrophiles d'autres résidus glucidiques.

De plus, la fixation de ces substituants par l'intermédiaire d'un atome de soufre confère aux dérivés de cyclomalto-oligosaccharides ramifiés de l'invention une meilleure stabilité vis-à-vis des agents de dégradation enzymatique, ce qui présente un grand intérêt lorsque ces dérivés sont destinés à être utilisés pour le transport de molécules pharmacophores dans les milieux biologiques.

Selon un premier mode de réalisation de l'invention, le cyclomalto-oligosaccharide comporte un seul substituant R de formule ZY. Dans ce cas, Y peut représenter comme on l'a vu plus haut soit un résidu monosaccharidique formé à partir d'un hexose ou d'un pentose sous forme cyclique pyranose ou furanose, lié en position anomérique par une liaison soufrée qui peut être de configuration alpha ou bêta, soit un résidu oligosaccharidique lié également en position anomérique par une liaison soufrée ; ce résidu oligosaccharide provient d'un oligosaccharide dont les liaisons interosidiques sont des atomes d'oxygène et/ou des atomes de soufre.

Lorsque Y est un résidu oligosaccharidique, il peut provenir d'oligosaccharides tels que le maltose, le cellobiose ou le lactose. Il peut aussi provenir d'oligosaccharides comportant une ou plusieurs liaisons interosidiques soufrées.

A titre d'exemple de résidu Y monosaccharidique, on peut citer ceux répondant aux formules suivantes :

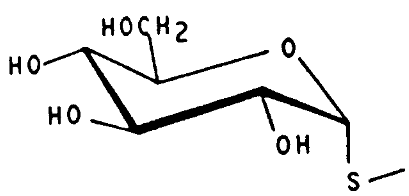 (VI)

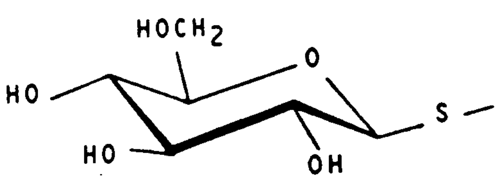 (VII)

Le résidu Y peut être lié directement au cyclomalto-oligosaccharide ou y être fixé par l'intermédiaire d'une chaîne thio-hydrocarbonée Z.

A titre d'exemples de dérivés de cyclomalto-oligosaccharides correspondant à ce premier mode de réalisation, on peut citer le dérivé de formule :

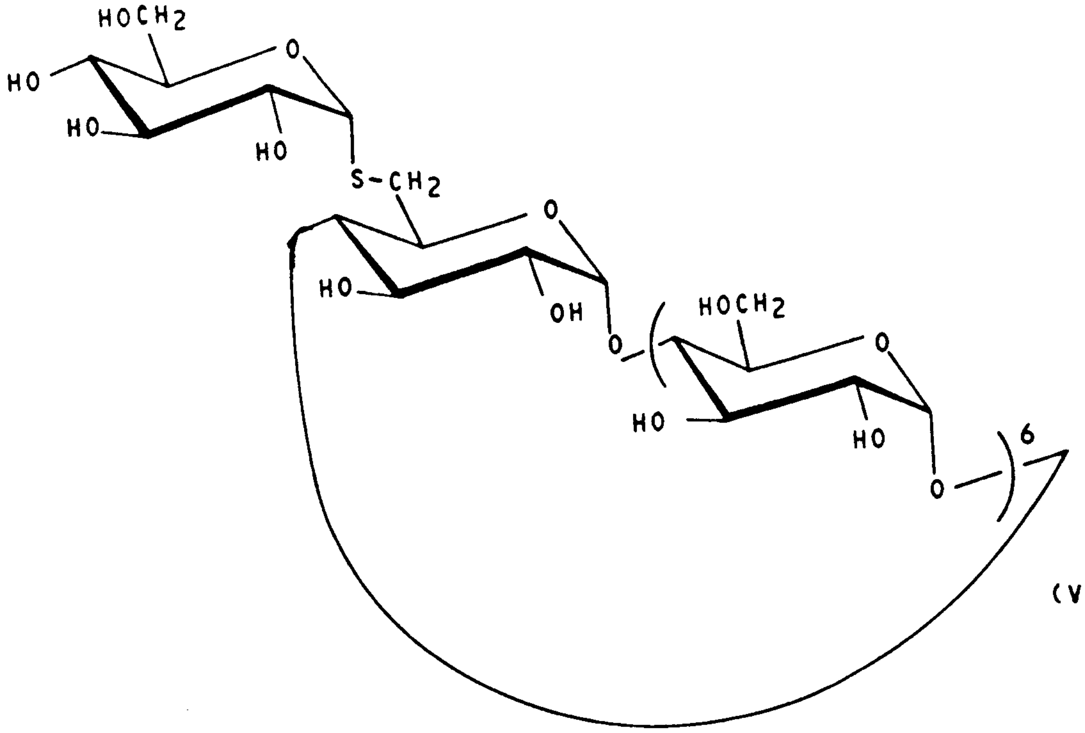

(VIII)

ou le dérivé de formule :

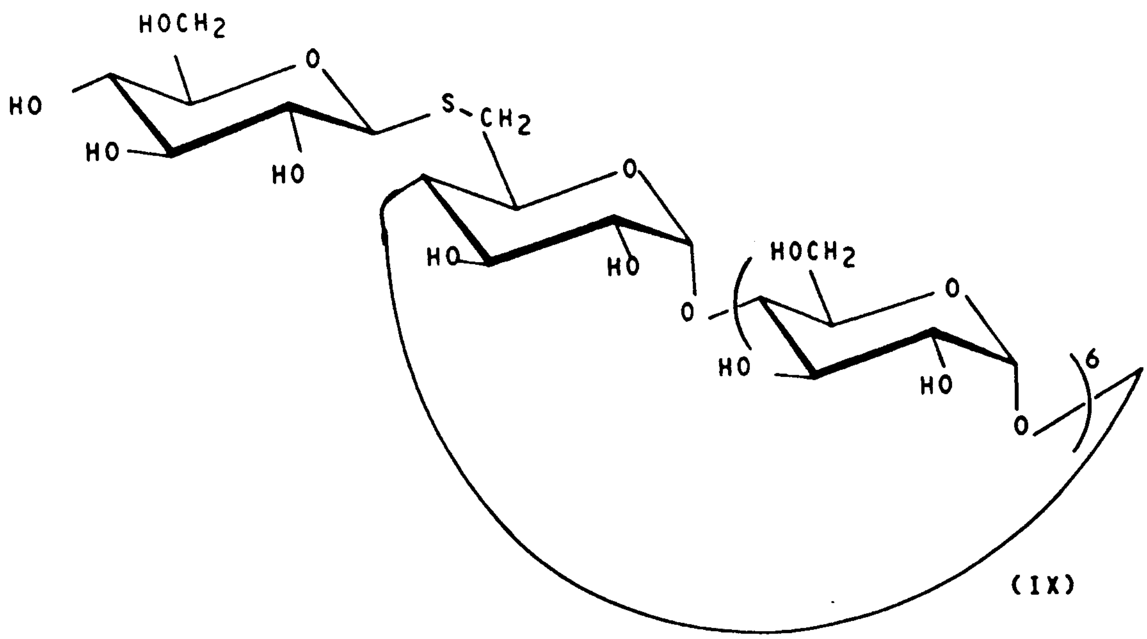

(IX)

Selon un second mode de réalisation de l'invention, le cyclomalto-oligosaccharide comprend plusieurs substituants, soit plusieurs radicaux R qui peuvent être identiques ou différents. Dans ce cas, les radicaux R peuvent comporter comme précédemment un résidu monosaccharidique provenant d'un hexose ou d'un pentose, ou un résidu oligosaccharidique dont les liaisons interosidiques peuvent être de type O et/ou S et de configuration alpha ou bêta.

De même, ce résidu peut être lié au cyclomalto-oligosaccharide directement par l'intermédiaire de l'atome de soufre ou par l'intermédiaire d'une chaîne thiohydrocarbonée répondant à la formule $SR^1$ avec $R^1$ représentant un radical hydrocarboné divalent saturé ou insaturé, qui peut répondre aux formules

données ci-dessus.

Les dérivés de cyclomalto-oligosaccharides de la présente invention peuvent être préparés aisément en partant des cyclomalto-oligosaccharides correspondants.

Aussi, l'invention a également pour objet un procédé de préparation d'un dérivé de cyclomalto-oligosaccharide répondant à la formule I donnée ci-dessus qui consiste à faire réagir un ester sulfonique de cyclomalto-oligosaccharide de formule :

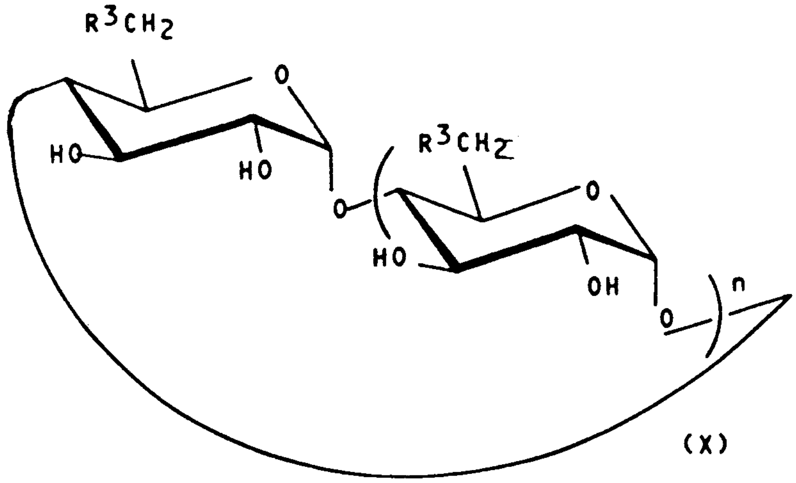

(X)

dans laquelle les $R^3$ qui peuvent être identiques ou différents, représentent OH ou un groupe de formule $R^6SO_3$ dans laquelle $R^6$ est un radical alkyle ou aryle, et n est un nombre entier de 3 à 10, l'un au moins des $R^3$ représentant un groupe de formule $R^6SO_3$,
avec un 1-thiomonosaccharide ou un 1-thiomalto-oligosaccharide de formule :

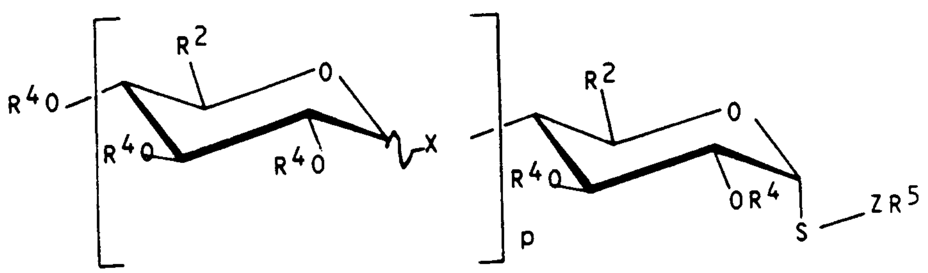

(XI)

ou de formule

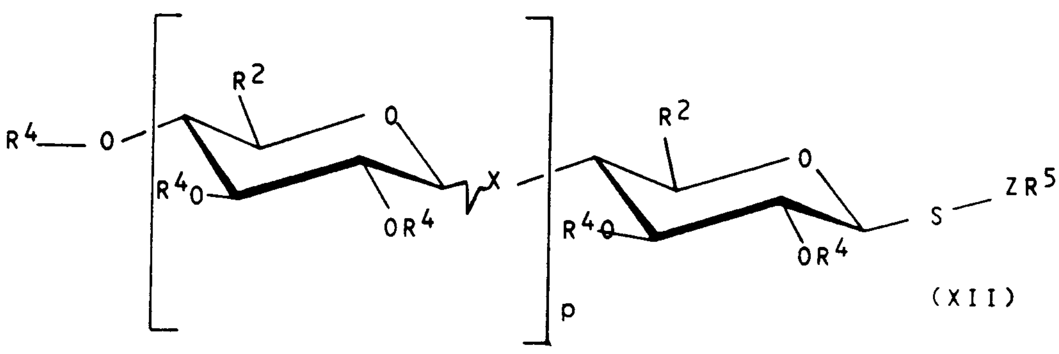

(XII)

dans lesquelles $R^2$ représente $CH_2OH$, H ou $CH_2OR^4$,X représente O, S ou un radical répondant aux formules :

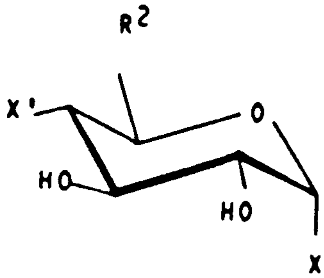 (IV) ou 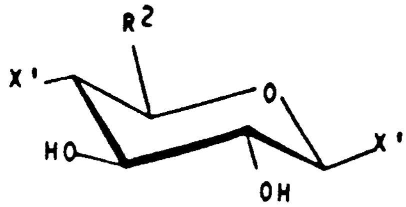 (V)

dans lesquelles les X' qui peuvent être identiques ou différents, représentent O ou S, et $R^2$ a la signification donnée ci-dessus, $R^4$ représente un atome d'hydrogène ou un groupe protecteur d'une fonction hydroxyle, $R^5$ représente le même groupe protecteur que $R^4$ ou un métal alcalin, p est égal à 0 ou est un entier de 1 à 9, et Z représente une simple liaison ou un radical divalent de formule $-S-(CH_2)_m-$ ou $-S-(CH_2)_q-CH=CH-(CH_2)_r-$ dans lesquel les m, q et r sont tels que $1 \leqq m \leqq 20$, $1 \leqq r \leqq 17$, $1 \leqq q \leqq 17$ et $q+r \leqq 18$, avec S étant relié à $R^5$.

Dans ce procédé, on part donc d'un ester sulfonique du cyclomalto-oligosaccharide voulu que l'on fait réagir avec un thio-mono ou thio-oligo-saccharide sous forme de sel de métal alcalin, par exemple de sel de sodium, ou de dérivé protégé par exemple de dérivé acétylé.

L'ester sulfonique $R^6SO_3$ peut être un aryl ou un alkylsulfonate.

Les radicaux alkyle susceptibles d'être utilisés pour $R^6$ peuvent être linéaires ou ramifiés, et ils ont généralement de 1 à 5 atomes de carbone.

Les radicaux aryle susceptibles d'être utilisés pour $R^6$ peuvent être les radicaux phényle, benzyle, tolyle, naphtyle, etc. ...

Les radicaux $R^4$ susceptibles d'être utilisés comme groupe protecteur de OH peuvent aussi être très variés. A titre d'exemple de tels radicaux, on peut citer les radicaux esters ou acétals.

Pour la mise en oeuvre de ce procédé, on peut donc partir de l'ester tolylsulfonique du cyclomaltooligosaccharide et de 1-thioglycose ou d'un 1-thio-malto-oligosaccharide dont les groupes hydroxyle sont protégés ou non. Ces derniers composés peuvent être préparés, par action de thioacétate de sodium sur le chlorure de glycosyle correspondant dont les groupes hydroxyle sont protégés par exemple par des groupes acétyle, dans un solvant approprié tel que l'hexaméthylphosphoramide.

Pour réaliser la réaction, on active tout d'abord le nucléophile soufré par action de méthanolate de sodium dans le méthanol, puis l'on met en réaction le sel de sodium du dérivé thioglycosidique ainsi obtenu avec l'ester sulfonique dans un solvant dont la polarité puisse permettre une activation suffisante de l'anion soufré.

A titre d'exemple de solvants susceptibles d'être utilisés, on peut citer le 1,3-diméthyl-2-oxo-hexahydropyrimidinone(DMPU), la 1,3-diméthyl-2-imidazolidinone, l'hexaméthylphosphoramide, le diméthylformamide et le diméthylsulfoxyde.

La réaction peut être effectuée à la température ambiante ou de préférence à une température supérieure, par exemple à 70 °C.

Dans ces conditions, le dérivé de l'invention est obtenu directement avec un degré de pureté qui peut être de 70%. Pour obtenir le dérivé analytiquement pur, on réalise une étape supplémentaire de purification par chromatographie liquide en utilisant par exemple une colonne de silice greffée de type C18 et un mélange eau-méthanol comme éluant.

Les esters sulfoniques de cyclomalto-oligosaccharides utilisés comme produits de départ dans ce procédé, peuvent être préparés par des procédés classiques, à partir des cyclomalto-oligosaccharides correspondants, par exemple par le procédé décrit par Matsui et al dans Bull. Chem. Soc. Jpn., 51 (1978), 3030-3034.

Les dérivés soufrés des monosaccharides ou des disaccharides utilisés comme produits de départ dans ce procédé peuvent être également préparés par des procédés classiques. Ainsi, le dérivé thioacétylé peut être préparé par le procédé décrit par M. Blanc-Muesser et al dans Carbohydr. Res., 1978, 67, 305. Le sel de sodium peut être préparé par le procédé décrit par Cerny et al dans Collect. Czech. Chem. Comm., 26 (1961) 2084-2086.

On peut aussi obtenir les dérivés de cyclomalto-oligosaccharides de formule (I) de l'invention par un second procédé qui consiste à faire réagir un dérivé de cyclomalto-oligosaccharide de formule :

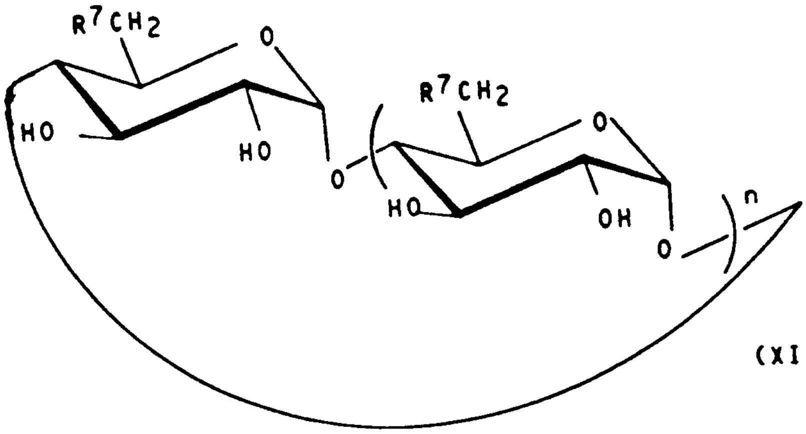

(XIII)

dans laquelle n est un entier de 3 à 10 et $R^7$ représente OH ou SH, l'un au moins des $R^7$ représentant SH, avec un dérivé de mono ou oligo-saccharidique de formule :

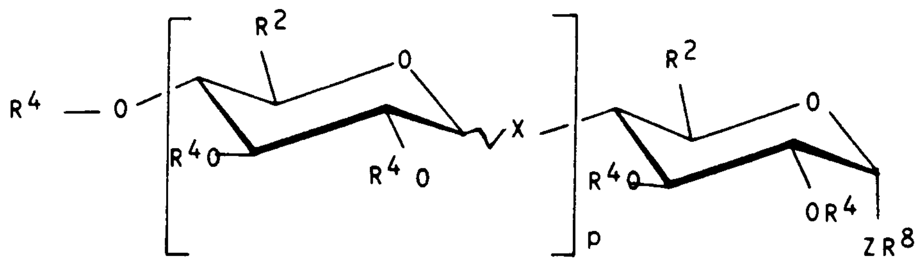

(XIV)

ou de formule :

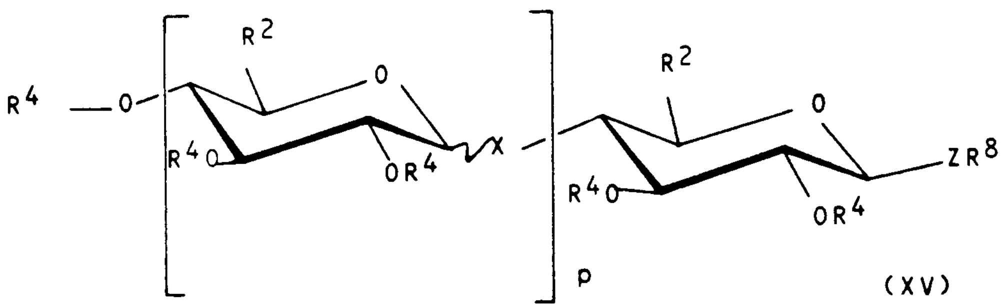

(XV)

dans lesquelles le(s) $R^2$ qui peuvent être identiques ou différents, représentent H, $CH_2OH$ ou $CH_2OR^4$, $R^4$ représente H ou un groupe protecteur d'une fonction OH, X représente S, O ou un radical répondant aux formules :

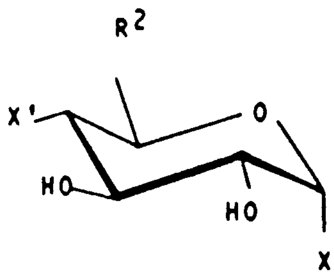 (IV) ou 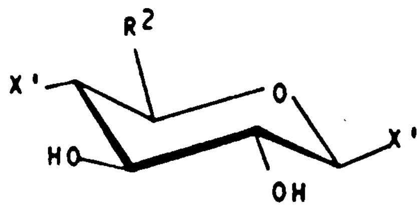 (V)

dans lesquelles les X' qui peuvent être identiques ou différents, représentent O ou S, et $R^2$ a la signification donnée ci-dessus, p est égal à 0 ou est un nombre entier de 1 à 9, Z représente une simple liaison ou un radical divalent de formule $-S-(CH_2)_m-$ ou $-S-(CH_2)_q-CH=CH-(CH_2)_r-$ dans lesquelles m, q et r sont tels que $1 \leqq m \leqq 20$, $1 \leqq r \leqq 17$, $1 \leqq q \leqq 17$ et $q+r \leqq 18$, et $R^8$ est un atome d'halogène.

Le dérivé mono ou oligo-saccharidique utilisé peut être en particulier 'un bromure ou un chlorure.

Le dérivé de cyclomalto-oligosaccharide utilisé comme produit de départ pour cette préparation peut être préparé sous la forme du thiolate de sodium correspondant par la méthode décrite par Griffiths et al dans Adv. Cat. 23(1973), p. 209. Les halogénures de mono ou d'oligosaccharides utilisés également comme produits de départ pour cette réaction peuvent être préparés par les procédés décrits par Lemieux et al dans Methods Carbohydr. Chem., 2(1963), 221-222 et 224-225. Pour réaliser la réaction, on peut utiliser les mêmes solvants aprotiques polaires que dans le premier procédé décrit ci-dessus.

Dans les deux procédés, lorsque le dérivé monosaccharidique ou oligosaccharidique utilisé a ses fonctions hydroxyle protégées par un groupement $R^4$, on réalise en fin d'opération, une étape de déprotection, par exemple de désacétylation.

Comme précédemment, on purifie ensuite le produit obtenu par chromatographie en utilisant par exemple la même colonne de silice greffée et le même éluant.

D'autres caractéristiques et avantages de l'invention apparaîtront mieux à la lecture des exemples suivants, donnés bien entendu à titre illustratif et non limitatif.

**Exemple 1** : Préparation du 6-S-alpha-D-glucopyranosyl-6-thio-cyclomaltoheptaose (composé n° 1).

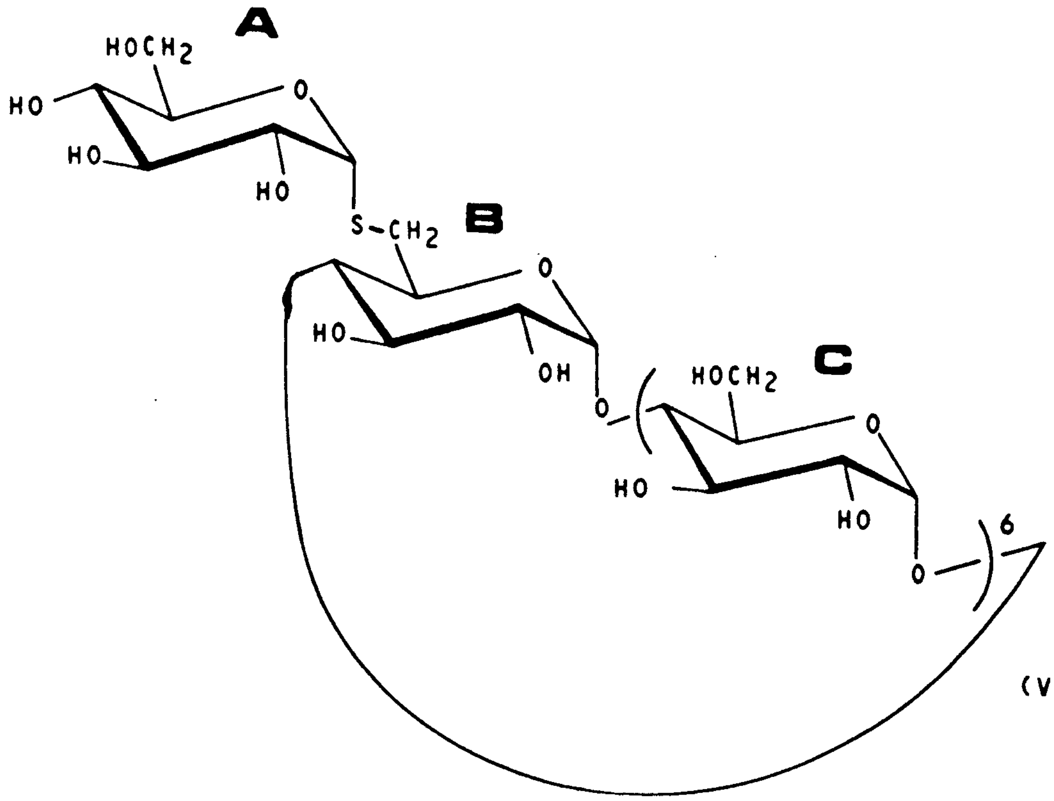

(VIII)

A une suspension de 1,3g (3,2 mmol) de 2,3,4,6-tétra- O-acétyl-1-S-acétyl-1-thio-alpha-D-glucopyranose dans 27ml de méthanol, on ajoute 3,9ml de méthylate de sodium 1M. On conserve la solution obtenue à la température ambiante pendant 12 heures, puis on la concentre sous pression réduite. On dissout alors le résidu solide obtenu dans le DMPU et on y ajoute 2,08g (1,6mmol) de 6-O-p-tolylsulfonylcyclomaltoheptaosepulvérulent.

On agite le mélange réactionnel pendant 3 heures à 70°C sous atmosphère d'azote, après quoi on concentre le solvant sous pression réduite (54°C/6 Pa) et l'on obtient un résidu solide brun que l'on dissout dans 20ml d'eau et que l'on déminéralise par passage sur une colonne de résine Amberlite MB-13. On soumet la solution aqueuse incolore à une extraction par le dichlorométhane, puis on la lyophilise, ce qui permet d'obtenir 1,9g d'un résidu solide.

On soumet ce résidu solide à une chromatographie liquide haute performance en utilisant une colonne de gel de silice de type C18 et un mélange méthanol-eau (9:91, V/V) comme éluant et un détecteur réfractométrique, ce qui confirme la présence d'un composant principal (k'12). On réalise ensuite une purification par chromatographie liquide préparative en utilisant une colonne Prep Pak 500/C18, le même solvant, et une pression de $1{,}52.10^3$kPa avec une vitesse d'écoulement de 100ml/min. On obtient ainsi 1,4g de 6-S-glucosyl cyclomaltoheptaose, soit le composé n° 1, ce qui correspond à un rendement de 66%.

Les caractéristiques de ce produit sont les suivantes :

- Point de fusion : 282-284°C (déc)
  $[\alpha]^{20}D = +172°C$(c 0,6, eau) ;
- RMN $^1H$, ($D_2O$) : δ5,45 (d, 1H, $J_{1,2}$ 5,4, H-1A), 5,09 (d, 1H, 4Hz, H-1B ou H-1C), 5,03 (m, 5H, H-1C), 4,99 (d,1H,4Hz,H1B ou H-1C), 4,07 - 3,78 (mm, H-5A, H-5B, H-5C, H6A, H-6C), 3,76 (dd, 1H, H-2A,$J_{2,3}$ 9.8), 3,66-3,47 (mm, H-2C, H-3A, H-4C), 3,88 (dd, 1H, $J_{3,4}$ 9,8, $J_{4,5}$<1,H-4A),3,14 (dd, 1H, $J_{5,6a}$ 2,6Hz, $J_{6a,6b}$ 12,5Hz, H-6aB), 3,13 (dd, 1H, $J_{5,6b}$ 5Hz, H-6b) ;
- Spectrométrie de masse : (f.a.b.$^+$, matrice thioglycérol), m/z 1313 (100%, $(M+H)^+$) ; avec addition d'INa : m/z 1335 (100%, $(M+Na)^+$), 1173 (8%, $(M+Na-162)^+$), 1140 (8%, $(M+Na-195)^+$)
- Analyse élémentaire :

| | C | H | S |
|---|---|---|---|
| calculée pour $C_{48}H_{80}O_{39}S$<br>trouvée | 43,88<br>44,62 | 6,14<br>6,27 | 2,44<br>2,54 |

Comme on le voit ci-dessus, la spectrométrie de masse en mode d'ionisation par bombardement d'atomes accélérés permet de détecter les ions moléculaires protonés à m/z 1313, signaux qui sont déplacés à m/z 1335 $(M+Na)^+$ par addition d'iodure de sodium à la matrice thioglycérol. Le spectre de résonance magnétique nucléaire (RMN) du $^{13}C$ de ce composé est donné dans le tableau 1 annexé. Ce spectre comme celui de la RMN du $^1H$ dont les attributions ont été confirmées par la technique de corrélation hétéronucléaire à deux dimensions, confirment la structure correspondant à la formule (VIII) donnée ci-dessus.

Dans le tableau 2 annexé, on a donné la solubilité dans l'eau du composé n° 1, ainsi que la solubilité dans l'eau du complexe d'inclusions formé entre ce composé et du 2-naphtol, de l'hydrocortisone ou du Tolnaftate (O-2-naphtylméthyl-(3-méthylphényl)carbamothioate).

A titre comparatif, on a donné dans ce tableau, les solubilités dans l'eau de ces mêmes composés ainsi que celle du cyclomaltoheptaose non modifié ($CG_7$) et celles des complexes d'inclusions du $CG_7$ avec le 2-naphtol, l'hydrocortisone et le Tolnaftate.

Au vu de ces tableaux, on remarque que la solubilité dans l'eau du composé n° 1 de l'invention est améliorée par rapport à celle du $CG_7$ et que la solubilité des complexes d'inclusion est multipliée par un facteur de 14 et 4390 par rapport à la solubilité dans l'eau.

Dans le tableau 2, on a aussi indiqué les constantes de stabilité des complexes formés. On constate aussi que la constante de stabilité des complexes formés est du même ordre que celle des complexes formés avec le $CG_7$. Ceci laisse présager un comportement similaire en ce qui concerne la biodisponibilité éventuelle du produit inclus, pour les applications de l'invention dans le domaine thérapeutique.

**Exemple 2** : Préparation du 6-S-bêta-D-glucopyranosyl-6-thio-cyclomaltoheptaose (composé n° 2).

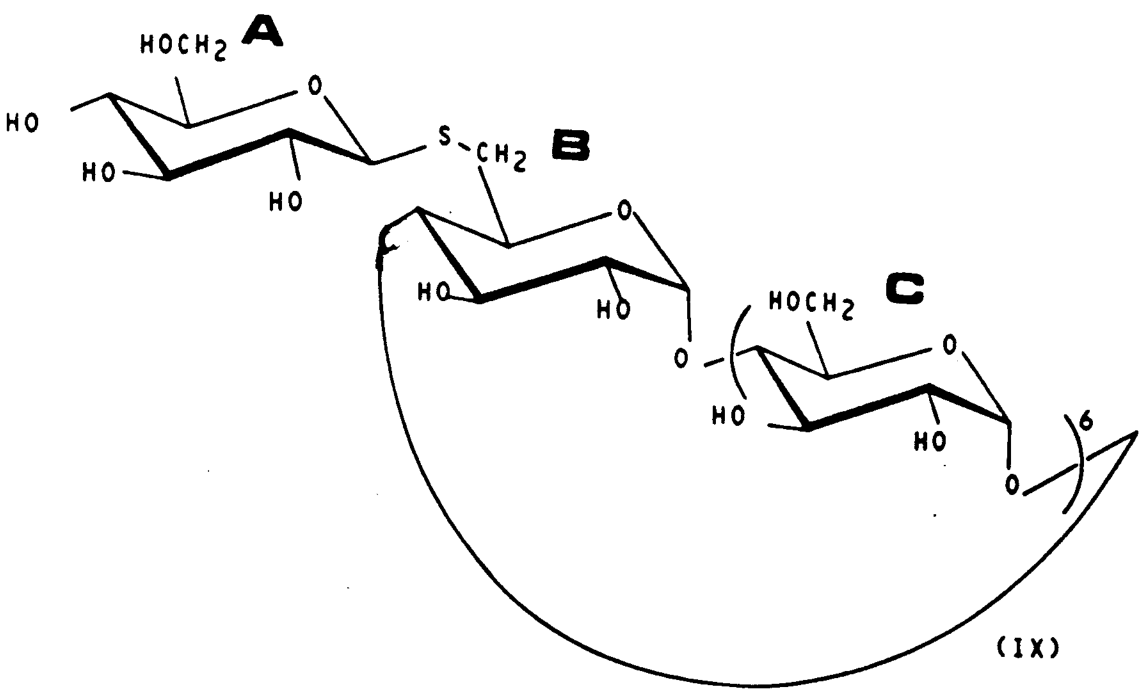

(IX)

A une solution de 0,33g (0,26mmol) de 6-O-p-tolylsulfonyl-cyclomaltoheptaose dans 1,5ml de DMPU, on ajoute 67mg (0,31mmol) du sel de sodium du 1-thio-bêta-D-glucopyranose. On agite le mélange réactionnel pendant 5 heures à 70 °C sous atmosphère d'azote, puis on évapore le solvant sous pression réduite (54 °C/6Pa), on obtient ainsi un résidu solide que l'on dissout dans 5ml d'eau et que l'on déminéralise ensuite par passage sur une colonne d'Amberlite MB-13.

On extrait alors la solution aqueuse incolore obtenue par 5ml de dichlorométhane, puis on la lyophilise. On obtient ainsi 0,305g de solide incolore qui en chromatographie liquide haute performance montre un composant principal dans les mêmes conditions que celles utilisées dans l'exemple 1. On purifie ce produit par chromatographie liquide préparative dans les mêmes conditions que celles de l'exemple 1 et on obtient ainsi 0,2g de 6-S-glucosyl-cyclomaltoheptaose (composé n° 2) analytiquement pur que l'on recristallise dans du méthanol. Le rendement est de 60%.

Les caractéristiques de ce composé sont les suivantes :

- Point de fusion : 268-272 ° C (déc) ;
- $[\alpha]^{20}D + 116°$, c 1, eau) ;
- RMN $^1H$, $\delta$5,09 (d, 1H, 4Hz, H-1B ou H-1C), 5,03 (m, 6H, H-1C ou H-1B--5H-1C), 4,60 (d, 1H, $J_{1,2}$ 10,2Hz, H-1A), 4,12-3,75 (mm, H-5A, H-5B, H-5C, H-6A, H-6C), 3,7-3 (mm, H-2A, H-2C, H-3C, H-4A, H-4B, H-4C, H-5A, H-6aB), 2,95 (m, 1H, H6bB) ;
- Spectrométrie de masse : (f.a.b., matrice thioglycérol), m/z 1313 (100%, $(M+H)^+$) ; avec addition d'INa : m/z 1335 (100%, $(M+Na)^+$, 1173 (12%, $(M+Na-162)^+$,1140 (10%, $(M+Na-195)^+$).
- Analyse élémentaire :

| | C | H | S |
|---|---|---|---|
| Calculée pour $C_{48}H_{80}O_{39}S$ | 43,88 | 6,14 | 2,44 |
| Trouvée : | 43,62 | 5,83 | 2,39 |

Le spectre de résonance magnétique nucléaire du $^{13}C$ de ce composé est donné dans le tableau 1 annexé et ces résultats ainsi que le spectre de RMN du $^1H$ confirment la structure correspondant à la formule (IX) donnée ci-dessus.

La solubilité dans l'eau du composé n° 2 ainsi que celles de ses complexes d'inclusion avec le 2-naphtol, l'hydrocortisone et le Tolnaftate sont données également dans le tableau 2 annexé.

Dans le tableau 2, on a également indiqué les constantes de stabilité des complexes d'inclusion formés.

Comme dans le cas du composé n° 1, la solubilité dans l'eau est très améliorée par rapport à celle du cyclomaltoheptaose et l'on obtient également une augmentation importante de la solubilisation des composés apolaires dans l'eau puisque la solubilité du Tolnaftate est augmentée de 3090 fois. De même, le 2-naphtol qui possède déjà une certaine solubilité dans l'eau voit celle-ci néanmoins augmenter de 14 fois en présence des composés n° 1 et n° 2, alors que ce taux de solubilisation n'est augmenté que de 5 fois en présence de cyclomaltoheptaose.

De même, les constantes de stabilité apparente des complexes formés entre le 2-naphtol et l'hydrocortisone ne sont pas notablement modifiées par rapport à celles des complexes correspondants formés avec le cyclomaltoheptaose dans les mêmes conditions.

Ainsi, les nouveaux dérivés de l'invention permettent d'améliorer dans des proportions importantes la solubilité dans l'eau de composés d'inclusion apolaires ou plus généralement insolubles ou peu solubles dans ce solvant par comparaison avec les cyclomalto-oligosaccharides correspondants, tout en conservant les capacités de complexation de ces derniers composés. Ces propriétés sont donc voisines de celles des cyclomalto-oligosaccharides ramifiés obtenus par les procédés de l'art antérieur qui sont beaucoup plus difficiles à mettre en oeuvre.

## TABLEAU 1

### RMN du $^{13}C$

### Mesures effectuées dans l'oxyde de deutérium avec le méthanol-$d_4$ comme standard externe

| Composé | Unité structurale à laquelle se rapporte l'attribution (a) | Déplacements chimiques (δ, p.p.m.) des atomes de carbone | | | | | |
|---|---|---|---|---|---|---|---|
| | | C-1 | C-2 | C-3 | C-4 | C-5 | C-6 |
| 1 | A | 85,9<br>(99,4)(b) | 71,3<br>(72,2)(b) | 73,7<br>(73,7)(b) | 69,8<br>(70,3)(b) | 72,5<br>(71,6)(b) | 60,6<br>(61,2)(b) |
| | B | 102<br>(102,1)(b) | 72,2<br>(72,3)(b) | 73,2<br>(74)(b) | 84,2<br>(82,4)(b) | 70,7<br>(72,7)(b) | 31<br>(67,8)(b) |
| | C | 102<br>(102,1)(b) | 72,2<br>(72,41)(b) | 73,2<br>(74,01)(b) | 81,4<br>(81,9)(b) | 71,9<br>(72,7)(b) | 60,5<br>(61,2)(b) |
| 2 | A | 87,1 | 72,1 | 79,8 | 69,7 | 77,4 | 61,2 |
| | B | 102 | 72,1 | 73 | 84,9 | 71,9 | 32,8 |
| | C | 102 | 72,1 | 73 | 81,2 | 71,9 | 60,4 |

(a) Les attributions se rapportent aux unités structurales définies dans les schémas de formules.

(b) Les valeurs entre parenthèses sont celles trouvées pour le 6-O-α-D-glucopyranosyl -cyclomaltoheptaose par Yamamoto et all. dans Carbohydr. Res., 166(1987) 156-161 et sont données à titre de comparaison.

## TABLEAU 2

**Solubilité comparée des 6-S-glucosyl-6-thio-cyclomaltoheptaoses 1 et 2, du cyclomaltoheptaose, ainsi que de leurs complexes d'inclusion avec quelques molécules apolaires. Les facteurs d'augmentation de solubilité[2] sont donnés entre parenthèses et les constantes de stabilité apparente entre crochets.**

| Soluté | Solubilité dans l'eau (µg/ml) | Solubilité (µg/ml) : facteur d'augmentation de solubilité entre parenthèse (2) Constante de stabilité des complexes (en $mol^{-1}$) entre crochets. | | |
|---|---|---|---|---|
| Cyclomaltopheptaose ($CG_7$) | $18.10^3$ | Solution aqueuse à $1,7.10^{-2}$ mol/l de $CG_7$ | Solution aqueuse à $3,10^{-2}$ mol/l de composé n°1 | Solution aqueuse à $3,10^{-2}$ mol/l de composé n° 2 |
| Composé 1 | $43.10^4$ | | | |
| Composé 2 | $30.10^3$ | | | |
| 2-naphtol | 810 | 4 150 (x 5) [30] | 11 010 (x 14) [44] | 11 010 (x 14) [44] |
| Hydrocortisone | 410 | 2 255 (x 6) [3 720] | 82 810 (x 200) [1 660] | 70 810 (x 170) [2 790] |
| Tolnaftate[1] | 12 | 840 (x 70) [1 330] | 52 690 (x 4390) [34 320] | 37 090 (x 3 090) [17 320] |

1. Tolnaftate : O-2-Naphtyl-méthyl-(3-méthylphényl)-carbomothioate.
2. Le facteur d'augmentation de solubilité est donné par rapport à l'eau.

## Revendications

**1.** Dérivé de cyclomalto-oligosaccharide répondant à la formule :

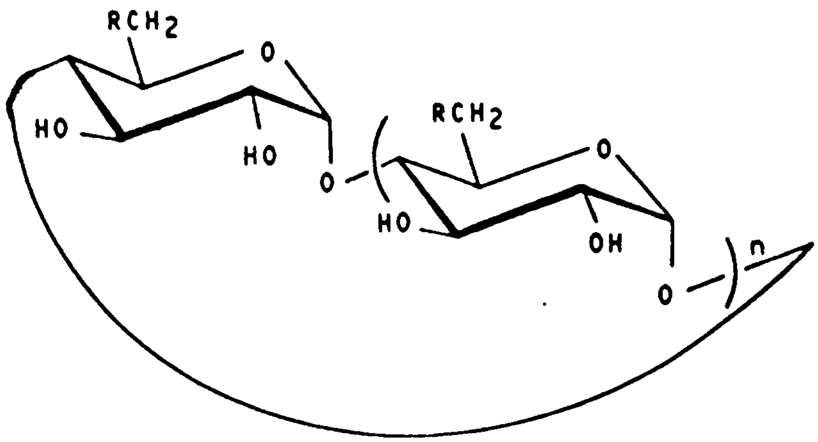

(I)

dans laquelle n est un nombre entier de 3 à 10, les R qui peuvent être identiques ou différents, représentent OH ou ZY avec Z représentant une simple liaison ou un radical divalent de formule $-S-(CH_2)_m-$dans laquelle m est un nombre entier de 1 à 20 ou de formule $-S-(CH_2)_q-CH=CH-(CH_2)_r-$ dans laquelle q et r sont des nombres entiers tels que
$1 \leq q \leq 17$
$1 \leq r \leq 17$ $q+r \leq 18$
avec S étant relié à $CH_2$, et Y représentant un radical de formule :

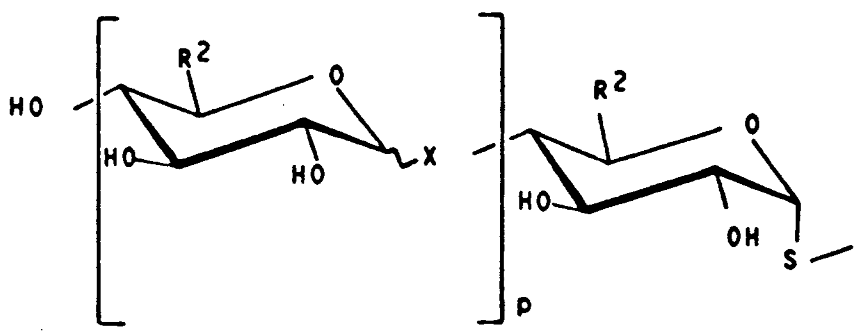

(II)

ou de formule :

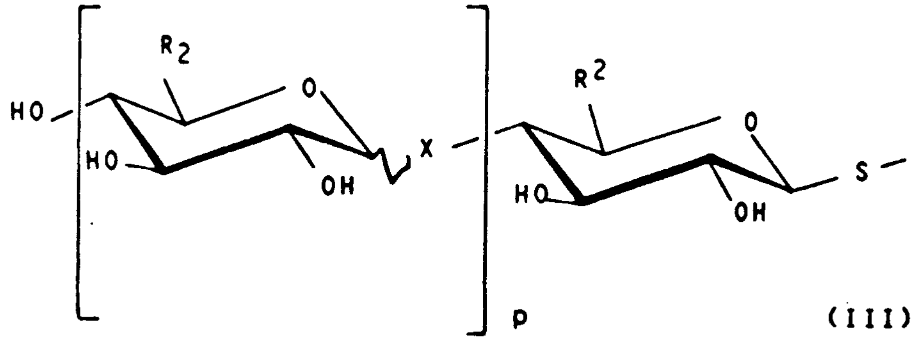

(III)

dans lesquelles $R^2$ représente H ou $CH_2OH$, p est égal à 0 ou est un nombre entier de 1 à 9, le(s) X qui peuvent être différents, représentent O, S ou un radical répondant aux formules :

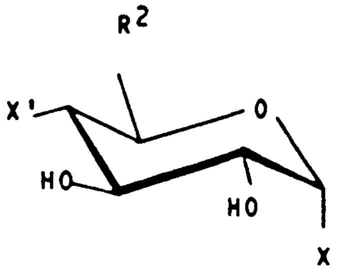 (IV) ou 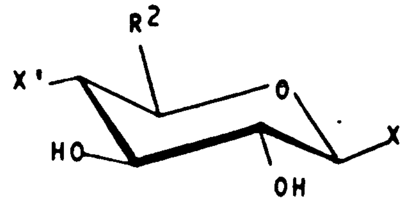 (V)

dans lesquelles les X' qui peuvent être identiques ou différents, représentent O ou S, et $R^2$ a la signification donnée ci-dessus, à condition que l'un au moins des R représente ZY.

**2.** Dérivé de cyclomalto-oligosaccharide selon la revendication 1, caractérisé en ce que Y représente :

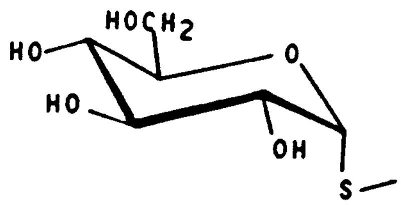 (VI)

**3.** Dérivé de cyclomalto-oligosaccharide selon la revendication 1, caractérisé en ce que Y représente :

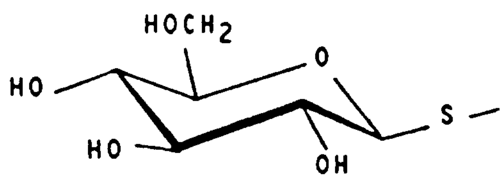 (VII)

**4.** Dérivé de cyclomalto-oligosaccharide selon l'une quelconque des revendications 1 à 3, caractérisé en ce que Z représente une simple liaison.

**5.** Dérivé de cyclomalto-oligosaccharide selon la revendication 1, caractérisé en ce qu'il répond à la formule :

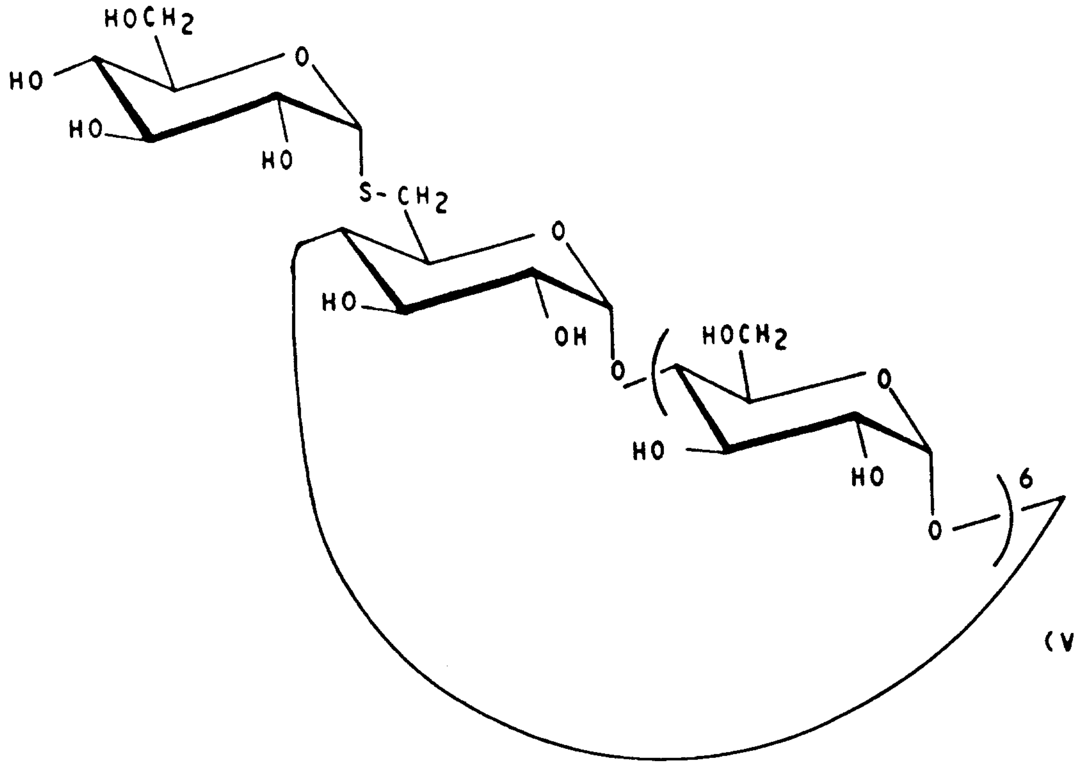

(VIII)

6. Dérivé de cyclomalto-oligosaccharide selon la revendication 1, caractérisé en ce qu'il répond à la formule :

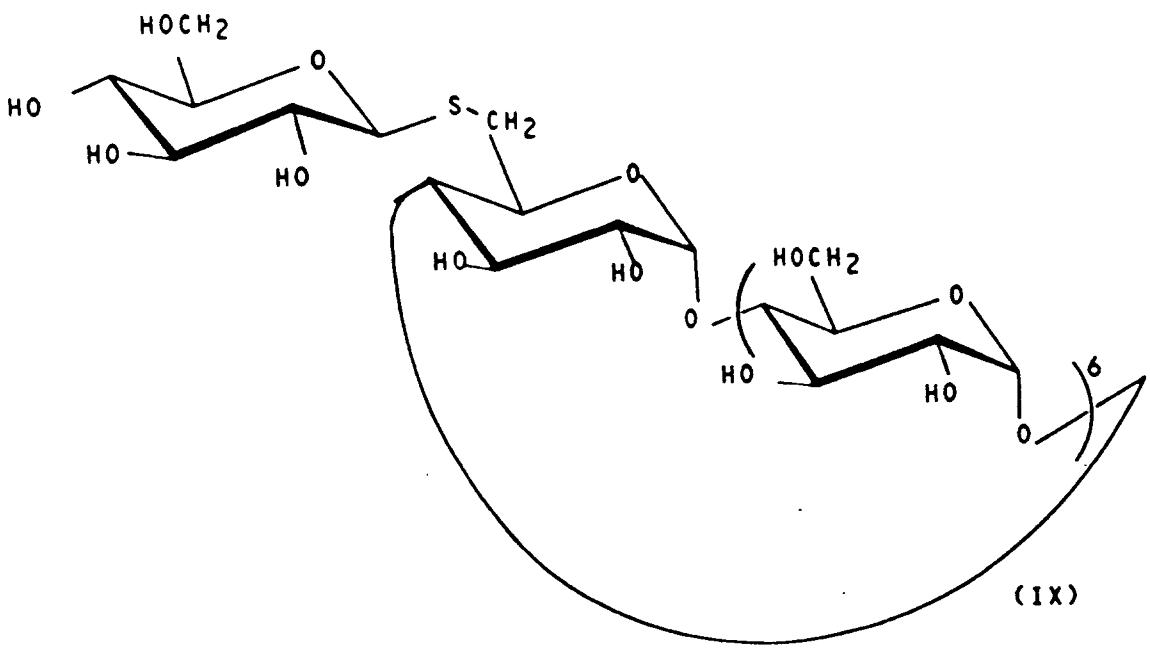

(IX)

7. Procédé de préparation d'un dérivé de cyclomalto-oligosaccharide selon la revendication 1, caractérisé en ce qu'il consiste à faire réagir un ester sulfonique de cyclomalto-oligosaccharide de formule :

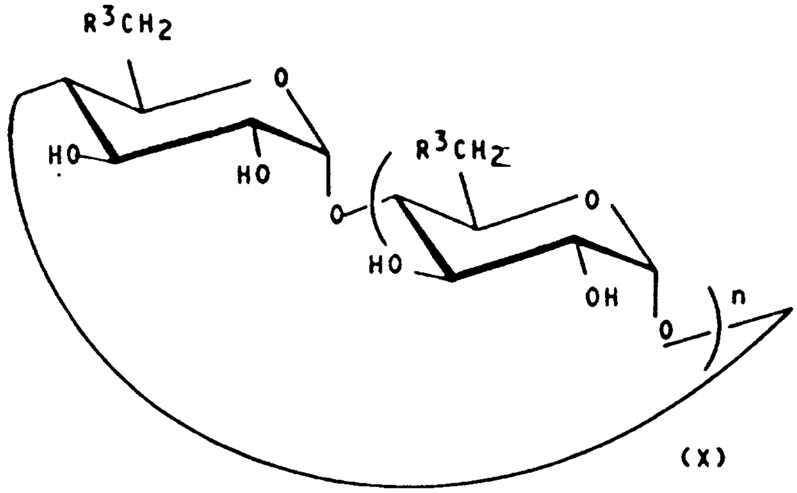

(X)

dans laquelle les $R^3$ qui peuvent être identiques ou différents, représentent OH ou un groupe de formule $R^6SO_3$ dans laquelle $R^6$ est un radical alkyle ou aryle et n est un nombre entier de 3 à 10, l'un au moins des $R^3$ représentant un groupe de formule $R^6SO_3$, avec un 1-thiomonosaccharide ou un 1-thiomalto-oligosaccharide de formule :

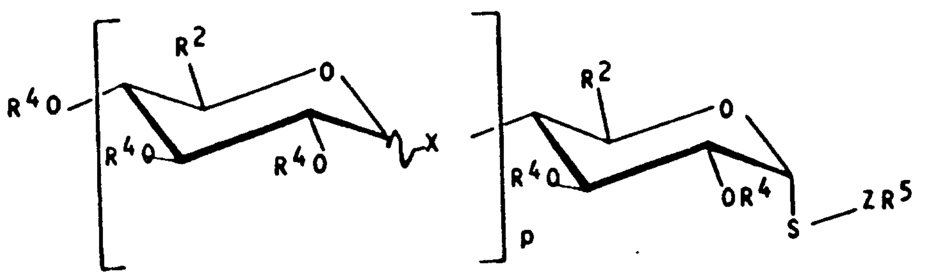

(XI)

ou de formule :

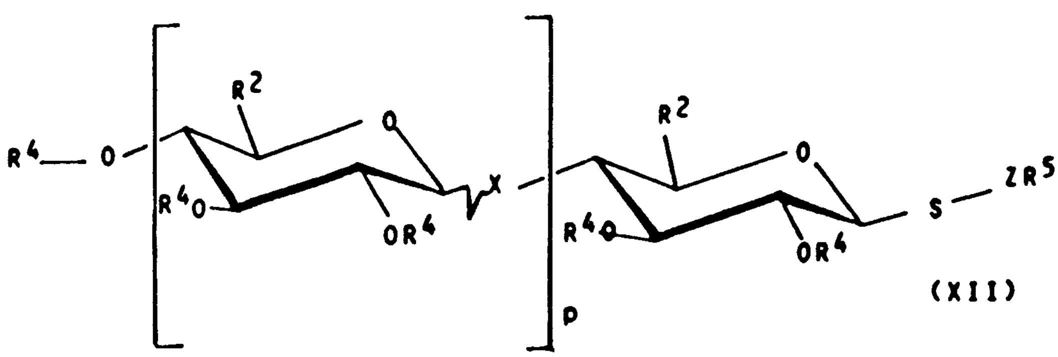

(XII)

dans lesquelles $R^2$ représente $CH_2OH$, H ou $CH_2OR^4$,X représente O, S, ou un radical répondant aux formules:

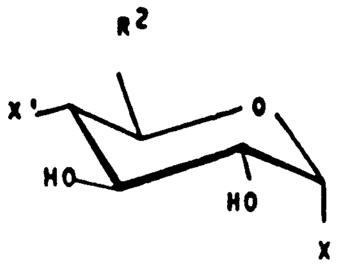 (IV) ou 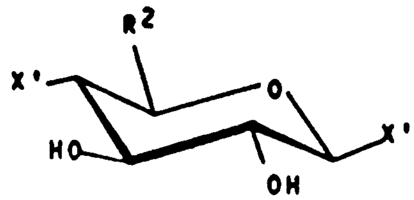 (V)

dans lesquelles les X' qui peuvent être identiques ou différents, représentent O ou S, et $R^2$ a la signification donnée ci-dessus, $R^4$ représente un atome d'hydrogène ou un groupe protecteur d'une fonction hydroxyle, $R^5$ représente le même groupe protecteur que $R^4$ ou un métal alcalin, p est égal à 0 ou est un entier de 1 à 9 et Z représente une simple liaison ou un radical divalent de formule $-S-(CH_2)_m-$ ou $-S-(CH_2)_q-CH=CH-(CH_2)_r-$ dans lesquelles m, q et r sont tels que $1 \leqq m \leqq 20$, $1 \leqq r \leqq 17$, $1 \leqq q \leqq 17$ et $q+r \leqq 18$, avec S étant relié à $R^5$.

**8.** Procédé selon la revendication 7, caractérisé en ce que $R^4$ et $R^5$ représentent le groupe acétyle.

**9.** Procédé selon l'une quelconque des revendications 7 et 8, caractérisé en ce que $R^6$ est le radical tolyle.

**10.** Procédé selon la revendication 7, caractérisé en ce que $R^4$ est un atome d'hydrogène et $R^5$ est le sodium.

**11.** Procédé de préparation d'un dérivé de cyclomalto-oligosaccharide selon la revendication 1, caractérisé en ce qu'il consiste à faire réagir un dérivé de cyclomalto-oligosaccharide de formule :

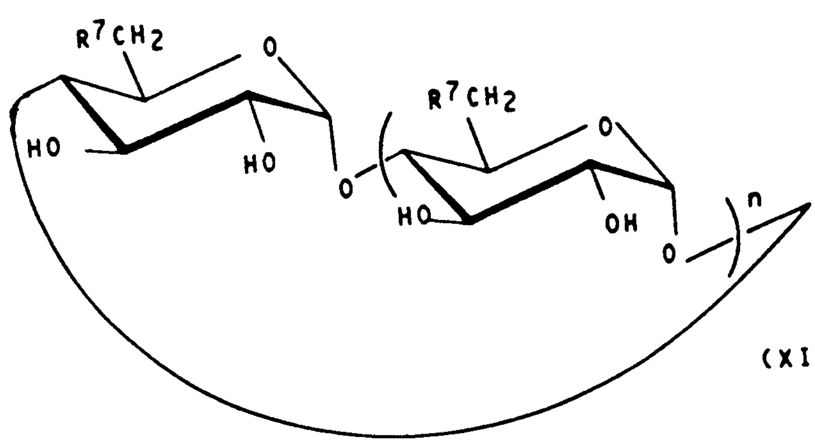

(XIII)

dans laquelle n est un entier de 3 à 10 et $R^7$ représente OH ou SH, l'un au moins des $R^7$ représentant SH, avec un dérivé de mono ou oligo-saccharidique de formule :

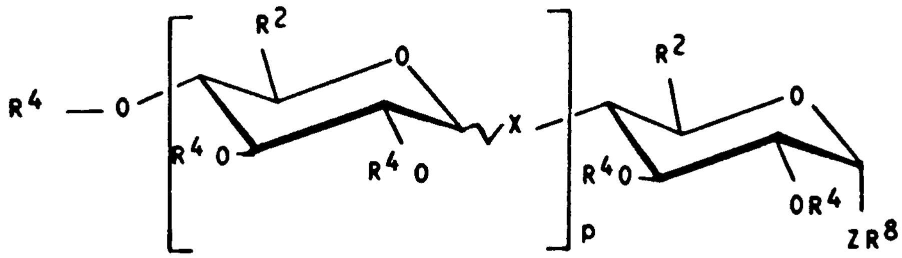

(XIV)

ou de formule :

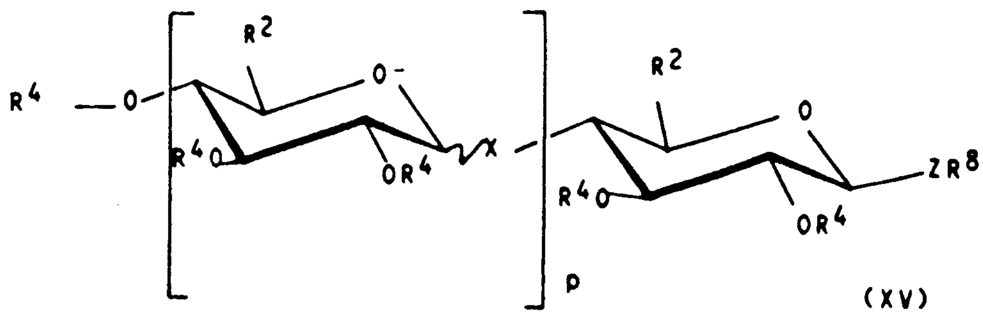

(XV)

dans lesquelles le(s) $R^2$ qui peuvent être identiques ou différents, représentent H, $CH_2OH$ ou $CH_2OR^4$,$R^4$ représente H ou un groupe protecteur d'une fonction OH, X représente S, O ou un radical répondant aux formules

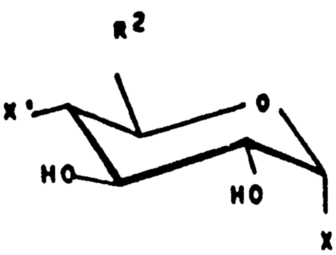 (IV) ou 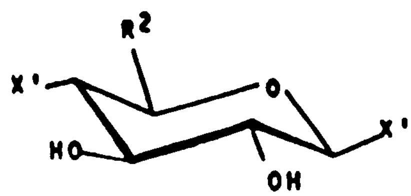 (V)

dans lesquelles les X' qui peuvent être identiques ou différents, représentent O ou S, et $R^2$ a la signification donnée ci-dessus, p est égal à 0 ou est un nombre entier de 1 à 9, Z représente une simple liaison ou un radical divalent de formule $-S-(CH_2)_m-$ ou $-S-(CH_2)_q-CH=CH-(CH_2)_r-$ dans lesquelles m, q et r sont tels que $1 \leqq m \leqq 20$, $1 \leqq r \leqq 17$, $1 \leqq q \leqq 17$ et $q+r \leqq 18$, avec S étant relié à $R^5$, et $R^8$ est un groupe capable de générer une charge positive.

**12.** Procédé selon la revendication 11, caractérisé en ce que $R^8$ est un atome d'halogène.

## Claims

**1.** Cyclomalto-oligosaccharide derivative of the formula:

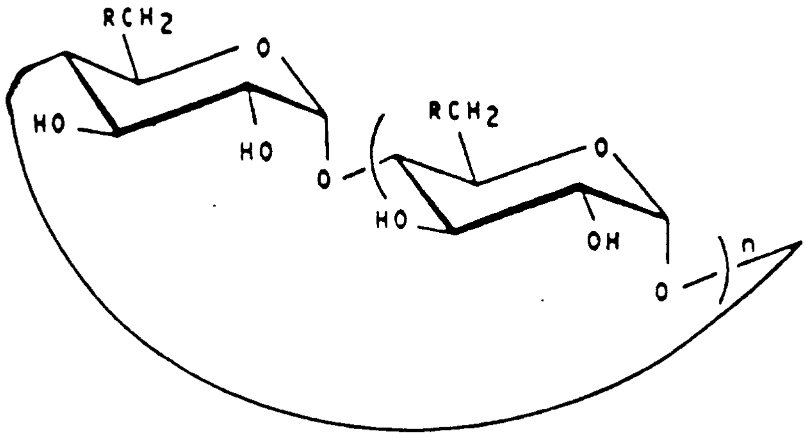

(I)

in which n is an integer from 3 to 10, the symbols R, which may be identical or different, dencte OH or ZY, with Z denoting a single bond or a divalent radical of the formula $-S-(CH_2)_m-$ in which m is an integer from 1 to 20 or of the formula $-S-(CH_2)_q-CH=CH-(CH_2)_r-$ in which q and r are integers such as
$1 \leqq q \leqq 17$
$1 \leqq r \leqq 17$ $q + r \leqq 18$
with S being attached to $CH_2$ and Y denoting a radical of the formula:

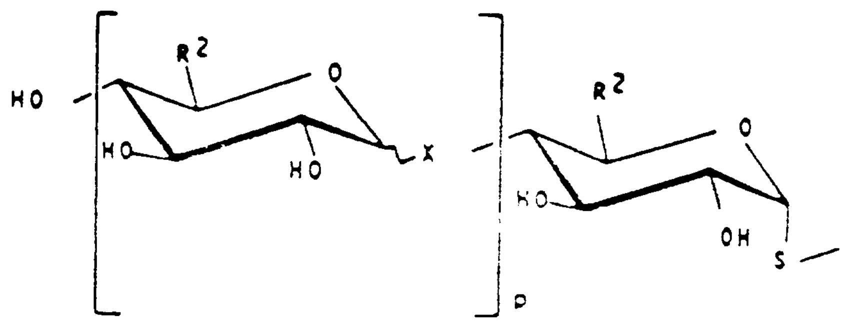

(II)

or of the formula:

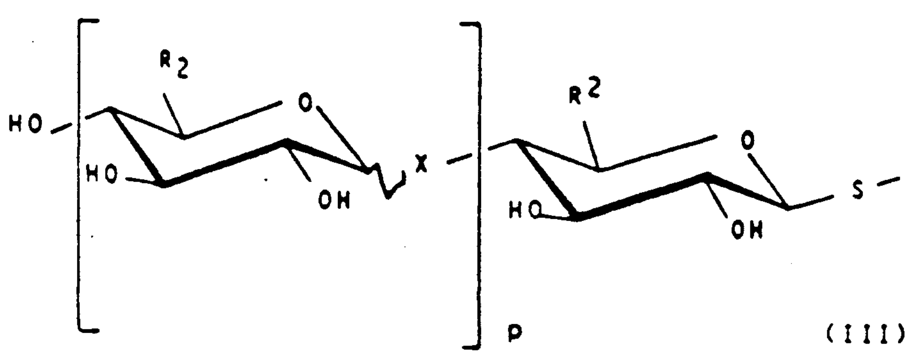

(III)

in which $R^2$ denotes H or $CH_2OH$, p is equal to 0 or is an integer from 1 to 9, the symbol(s) X, which

may differ, denote O, S or a radical of the formulae:

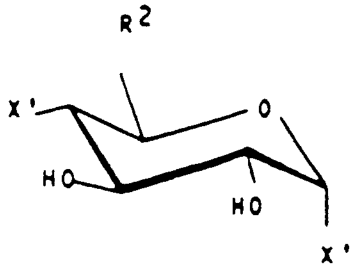 (IV) or 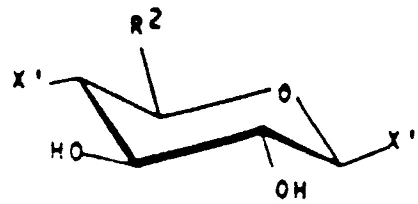 (V)

in which the symbols X', which may be identical or different, denote O or S, and $R^2$ has the meaning stated above, provided that at least one of the symbols R denotes ZY.

**2.** Cyclomalto-oligosaccharide derivative according to claim 1, characterised in that Y denotes:

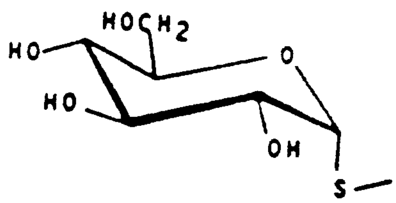 (VI)

**3.** Cyclomalto-oligosaccharide derivative according to claim 1, characterised in that Y denotes:

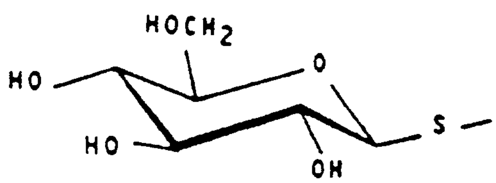 (VII)

**4.** Cyclomalto-oligosaccharide derivative according to any of claims 1 to 3, characterised in that Z denotes a single bond.

5. Cyclomalto-oligosaccharide derivative according to claim 1, characterised in that it is of the formula:

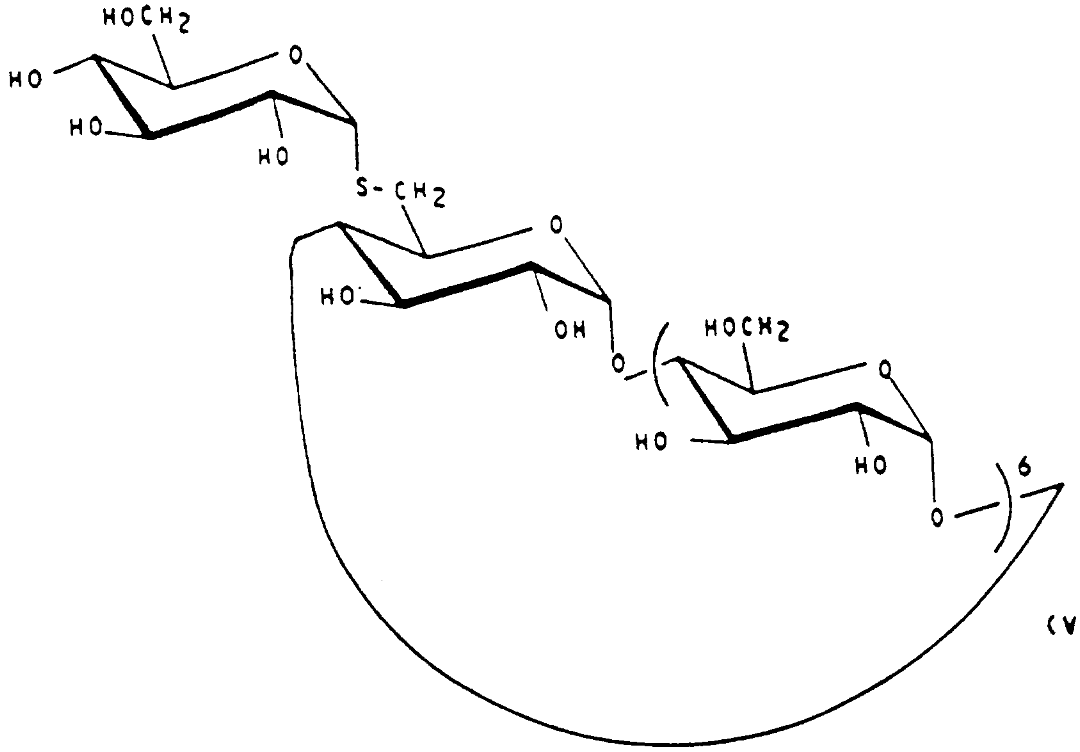

(VIII)

6. Cyclomalto-oligosaccharide derivative according to claim 1, characterised in that it is of the formula:

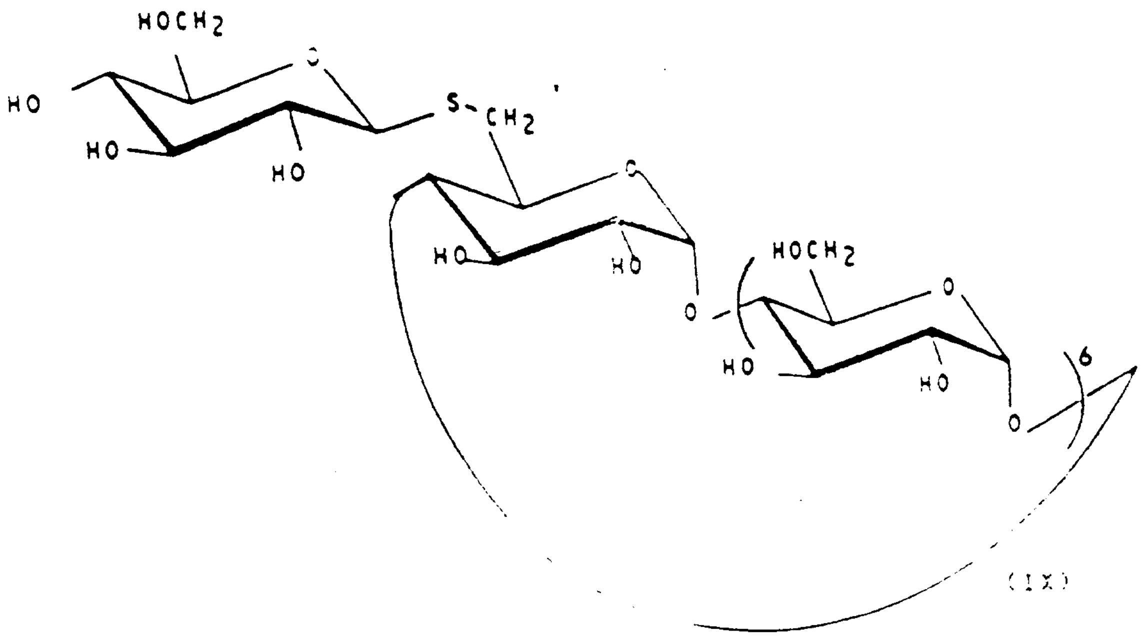

(IX)

7. Process for the production of a cyclomalto-oligosaccharide derivative according to claim 1, characterised in that it consists in reacting a cyclomalto-oligosaccharide sulphonic ester of the formula:

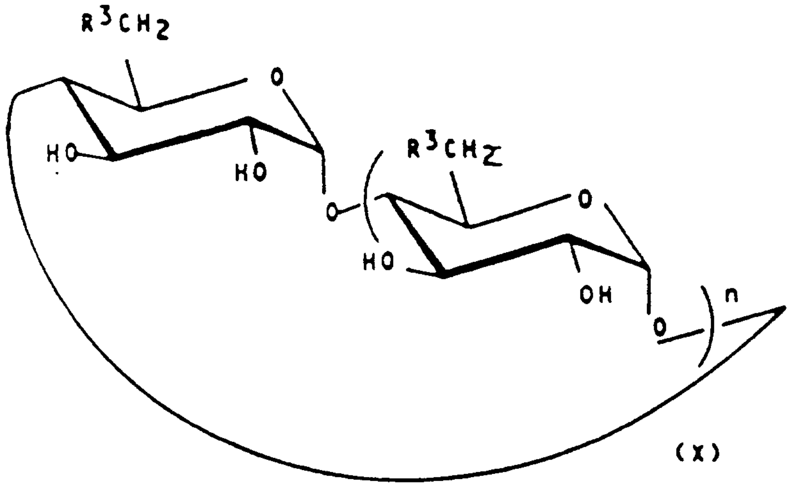

(X)

in which the symbols $R^3$, which may be identical or different, denote OH or a group of the formula $R^6SO_3$ in which $R^6$ is an alkyl or aryl radical and n is an integer from 3 to 10, at least one of the symbols $R^3$ denoting a group of the formula $R^6SO_3$, with a 1-thiomonosaccharide or a 1-thiomalto-oligosaccharide of the formula:

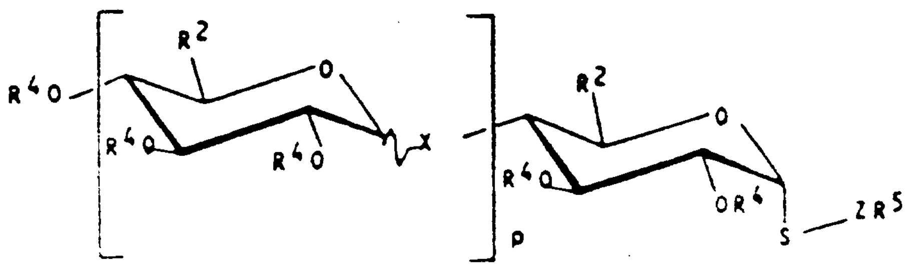

(XI)

or of the formula:

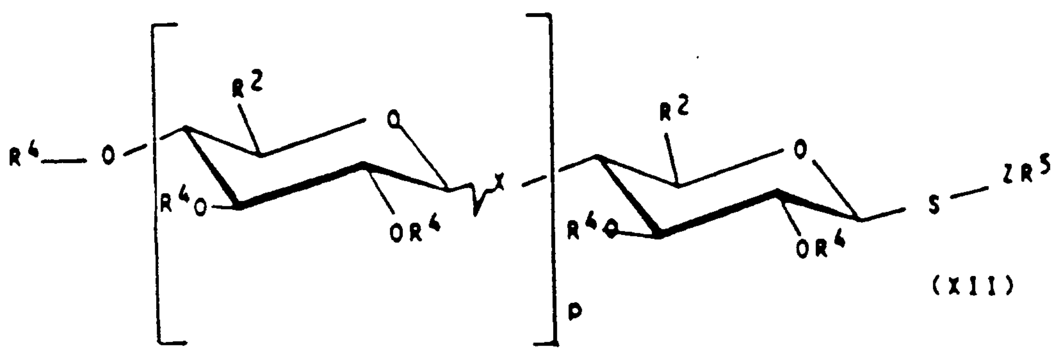

(XII)

in which $R^2$ denotes $CH_2OH$, H or $CH_2OR^4$, X denotes O, S or a radical of the formulae:

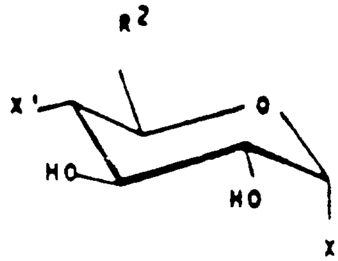
(IV)

or

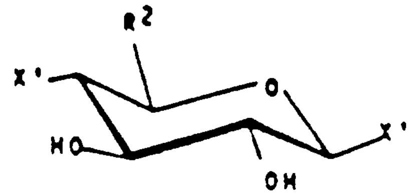
(V)

in which the symbols X', which may be identical or different, denote O or S, and $R^2$ has the meaning stated above, $R^4$ denotes a hydrogen atom or a protective group of a hydroxyl function, $R^5$ denotes the same protective group as $R^4$ or an alkali metal, p is equal to 0 or is an integer from 1 to 9 and Z denotes a single bond or a divalent radical of the formula $-S-(CH_2)_m-$ or $-S-(CH_2)_q-CH=CH-(CH_2)_r-$ in which m, q and r are such that $1 \leqq m \leqq 20$, $1 \leqq r \leqq 17$, $1 \leqq q \leqq 17$ and $q + r \leqq 18$, with S being attached to $R^5$.

**8.** Process according to claim 7, characterised in that $R^4$ and $R^5$ denote an acetyl group.

**9.** Process according to either of claims 7 and 8, characterised in that $R^6$ is a tolyl radical.

**10.** Process according to claim 7, characterised in that $R^4$ is a hydrogen atom and $R^5$ is sodium.

**11.** Process for the production of a cyclomalto-oligosaccharide according to claim 1, characterised in that it consists in reacting a cyclomalto-oligosaccharide derivative of the formula:

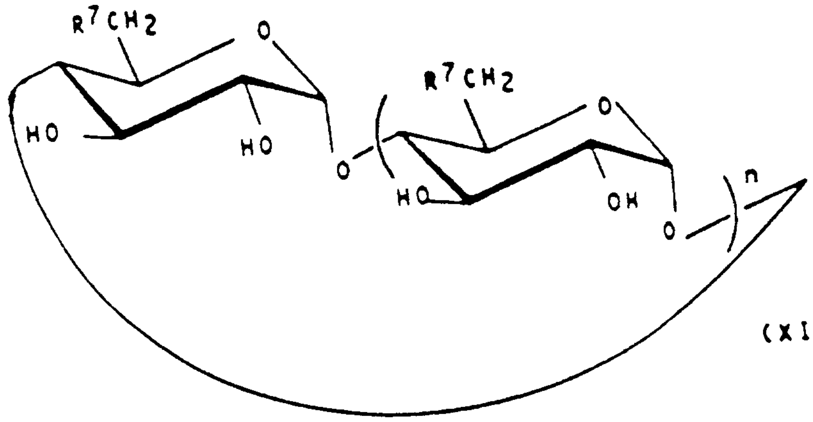
(XIII)

in which n is an integer from 3 to 10 and $R^7$ denotes OH or SH, at least one of the symbols $R^7$ denoting SH, with a mono- or oligo-saccharide derivative of the formula:

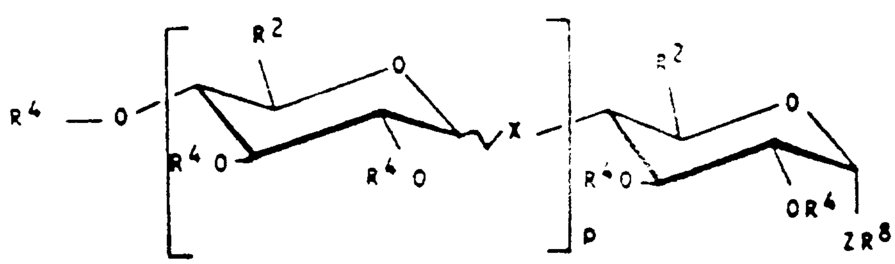
(XIV)

or of the formula:

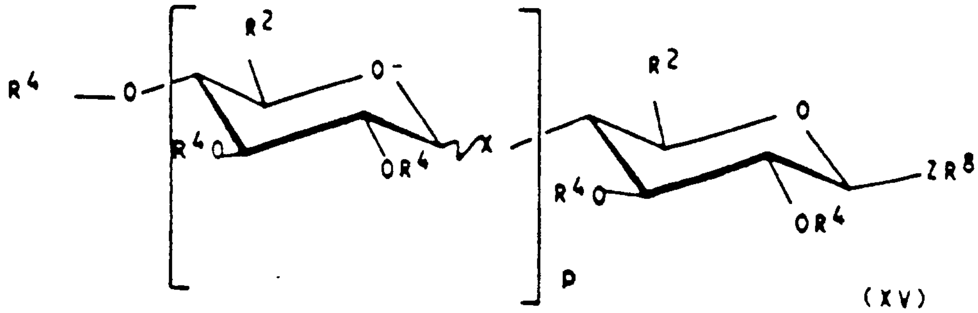

(XV)

in which the symbol(s) $R^2$, which may be identical or different, denote H, $CH_2OH$ or $CH_2OR^4$, $R^4$ denotes H or a protective group of an OH function, X denotes S, O or a radical of the formulae

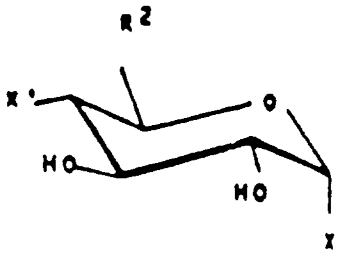

(IV) or

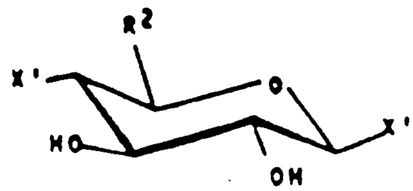

(V)

in which the symbols X', which may be identical or different, denote O or S, and $R^2$ has the meaning stated above, p is equal to 0 or is an integer from 1 to 9, Z denotes a single bond or a divalent radical of the formula $-S-(CH_2)_m-$ or $-S-(CH_2)_q-CH=CH-(CH_2)_r-$ in which m, q and r are such that $1 \leqq m \leqq 20$, $1 \leqq r \leqq 17$, $1 \leqq q \leqq 17$ and $q + r \leqq 18$, with S being attached to $R^5$, and $R^8$ is a group capable of producing a positive charge.

**12.** Process according to claim 11, characterized in that $R^8$ is a halogen atom.

**Patentansprüche**

**1.** Cyclomalto-oligosaccharid-Derivat entsprechend der Formel:

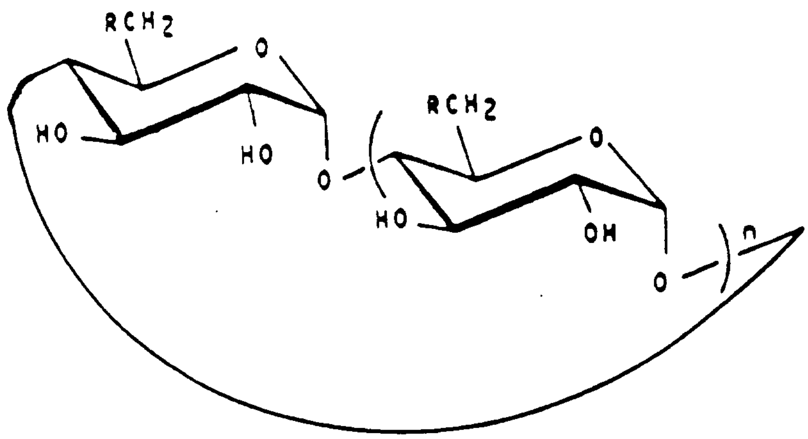

(I)

worin n eine ganze Zahl von 3 bis 10 ist, die R, welche identisch oder verschieden sein können, OH oder ZY darstellen, wobei Z eine Einfachbindung oder einen zweiwertigen Rest der Formel $-S-(CH_2)_m-$,

worin m eine ganze Zahl von 1 bis 20 ist, oder der Formel $-S-(CH_2)_q-CH=CH-(CH_2)_r-$, worin q und r ganze Zahlen sind derart, daß

$1 \leqq q \leqq 17$

$1 \leqq r \leqq 17$ $q + r \leqq 18$

wobei S an $CH_2$ gebunden ist, darstellt, und Y einen Rest der Formel:

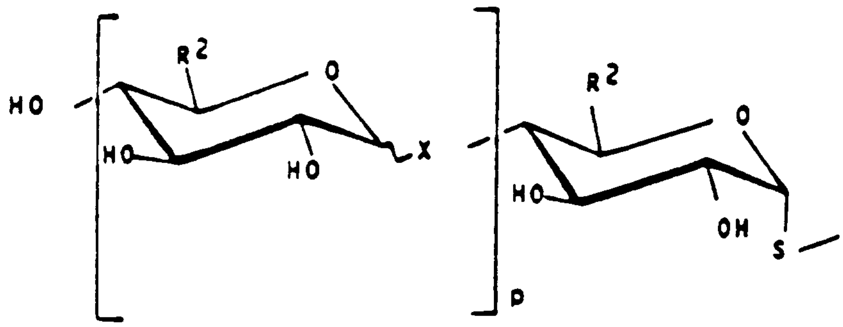

(II)

oder der Formel:

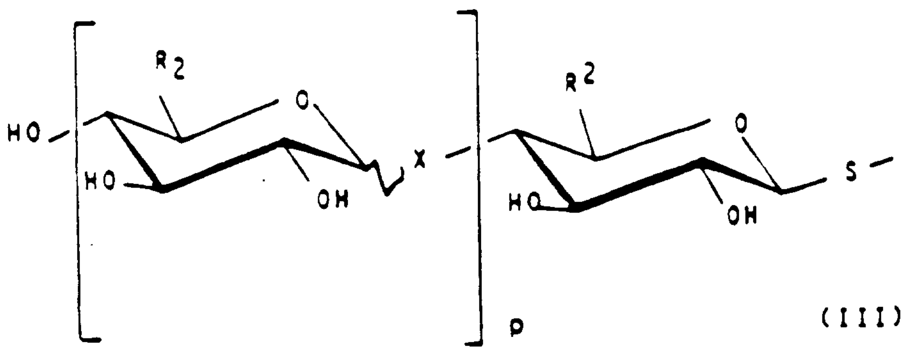

(III)

darstellt, in welchen $R^2$ H oder $CH_2OH$ darstellt, p gleich 0 ist oder eine ganze Zahl von 1 bis 9 ist, das oder die X, welche verschieden sein können, O, S oder einen Rest darstellen, welcher den Formeln entspricht:

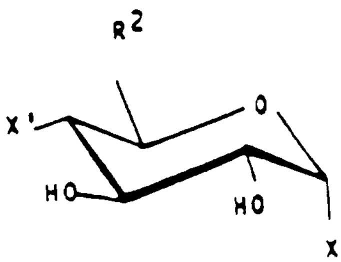

(IV) oder

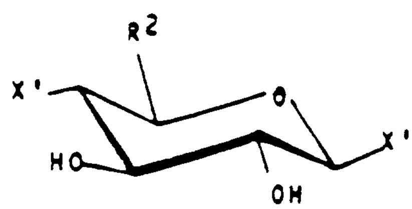

(V)

worin die X', die identisch oder verschieden sein können, O oder S darstellen und $R^2$ die oben angegebene Bedeutung hat, mit der Maßgabe, daß mindestens eines der R ZY darstellt.

2. Cyclomalto-oligosaccharid-Derivat nach Anspruch 1, dadurch gekennzeichnet, daß Y darstellt:

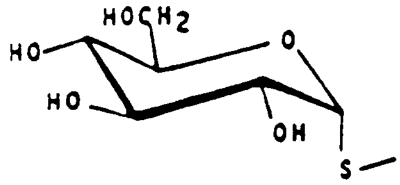

(VI)

3. Cyclomalto-oligosaccharid-Derivat nach Anspruch 1, dadurch gekennzeichnet, daß Y darstellt:

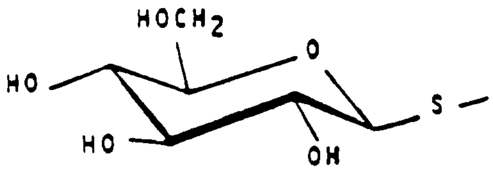

(VII)

4. Cyclomalto-oligosaccharid-Derivat nach einem der Ansprüche 1 bis 3, dadurch gekennzeichnet, daß Z eine Einfachbindung darstellt.

5. Cyclomalto-oligosaccharid-Derivat nach Anspruch 1, dadurch gekennzeichnet, daß es der Formel entspricht:

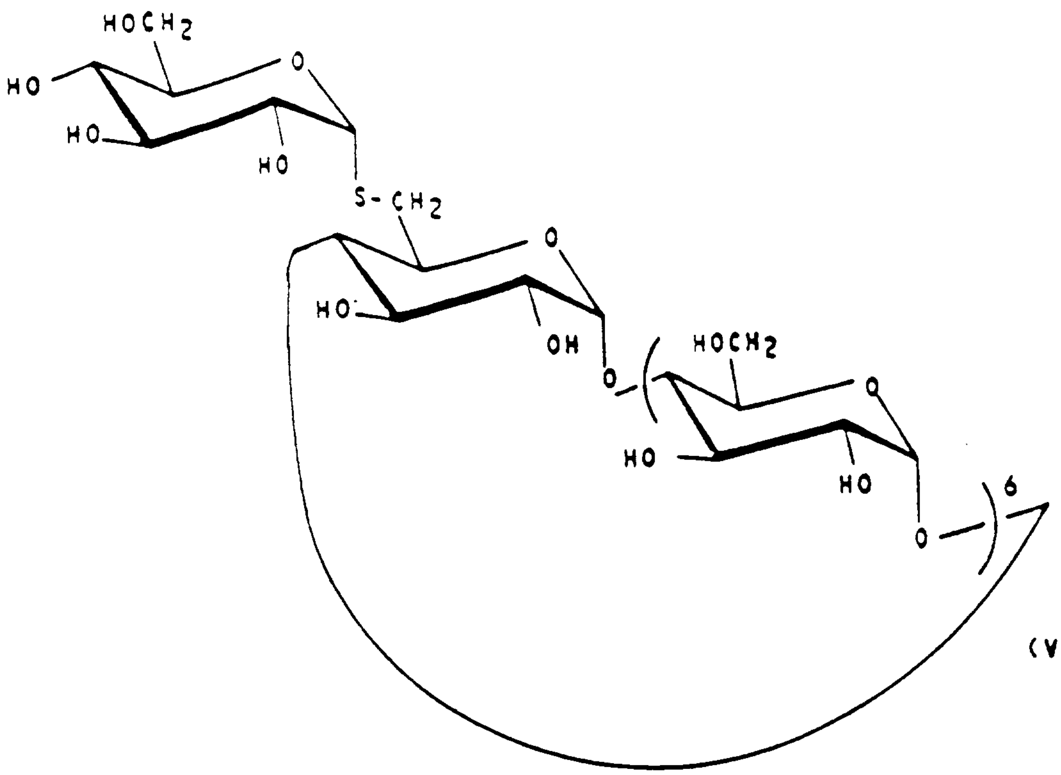

(VIII)

6. Cyclomalto-oligosaccharid-Derivat nach Anspruch 1, dadurch gekennzeichnet, daß es der Formel entspricht:

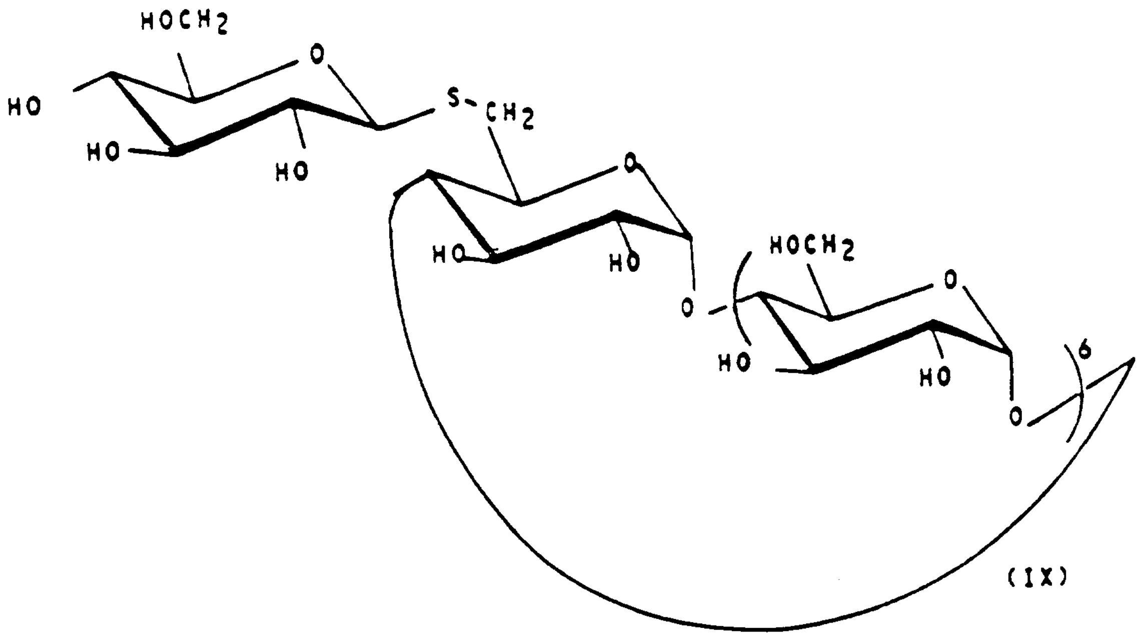

(IX)

7. Verfahren zur Herstellung eines Cyclomalto-oligosaccharid-Derivats nach Anspruch 1, dadurch gekennzeichnet, daß es darin besteht, einen Sulfonsäureester von Cyclomalto-oligosaccharid der Formel:

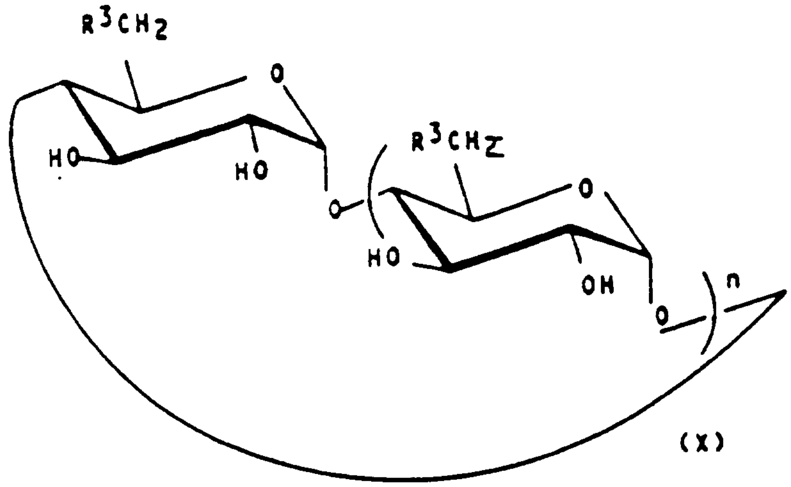

(X)

worin die $R^3$, die identisch oder verschieden sein können, OH oder eine Gruppe der Formel $R^6SO_3$ darstellen, in welcher $R^6$ ein Alkylrest oder Arylrest ist und n eine ganze Zahl von 3 bis 10 ist, wobei mindestens einer von $R^3$ eine Gruppe der Formel $R^6SO_3$ darstellt,
mit einem 1-Thiomonosaccharid oder
einem 1-Thiomalto-oligosaccharid der Formel:

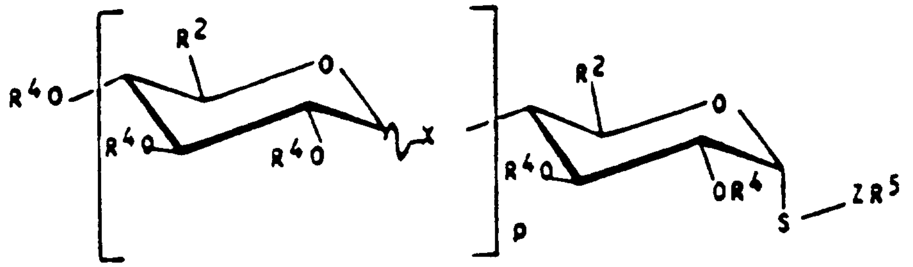

(XI)

oder der Formel:

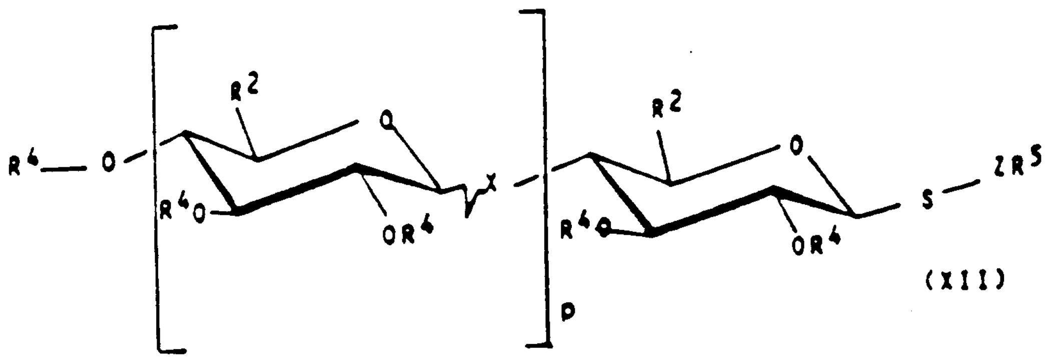

(XII)

umzusetzen,
in welchen $R^2$ $CH_2OH$, H oder $CH_2OR^4$ darstellt, X O, S oder einen Rest darstellt, welcher den Formeln entspricht:

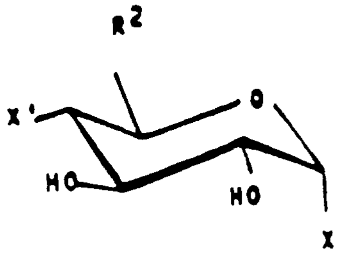

(IV)

oder

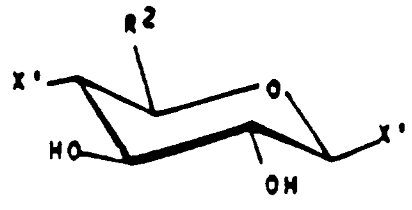

(V)

in welchen die X', die identisch oder verschieden sein können, O oder S darstellen, und $R^2$ die oben angegebene Bedeutung hat, $R^4$ ein Wasserstoffatom oder eine Schutzgruppe einer Hydroxylfunktion darstellt, $R^5$ die gleiche Schutzgruppe wie $R^4$ oder ein Alkalimetall darstellt, p gleich 0 ist oder eine ganze Zahl von 1 bis 9 ist und Z eine Einfachbindung oder einen zweiwertigen Rest mit der Formel $-S-(CH_2)_m-$ oder $-S-(CH_2)_q-CH=CH-(CH_2)_r-$, in welchen m, q und r so sind, daß $1 \leq m \leq 20$, $1 \leq r \leq 17$, $1 \leq q \leq 17$ und $q+r \leq 18$, wobei S an $R^5$ gebunden ist, darstellt.

**8.** Verfahren nach Anspruch 7, dadurch gekennzeichnet, daß $R^4$ und $R^5$ die Acetylgruppe darstellen.

**9.** Verfahren nach einem der Ansprüche 7 und 8, dadurch gekennzeichnet, daß $R^6$ der Tolylrest ist.

**10.** Verfahren nach Anspruch 7, dadurch gekennzeichnet, daß $R^4$ ein Wasserstoffatom ist und $R^5$ Natrium ist.

**11.** Verfahren zur Herstellung eines Cyclomalto-oligosaccharid-Derivats nach Anspruch 1, dadurch gekennzeichnet, daß es darin besteht, ein Cyclomalto-oligosaccharid-Derivat der Formel:

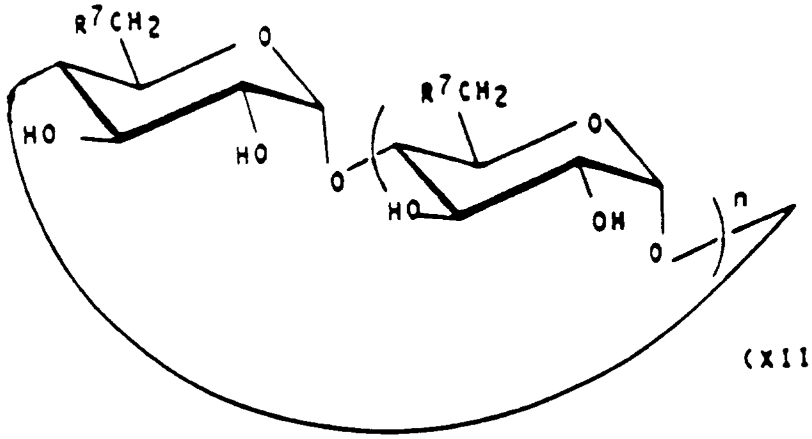

(XIII)

in welcher n eine ganze Zahl von 3 bis 10 ist und $R^7$ OH oder SH darstellt, wobei mindestens einer der $R^7$ SH darstellt, mit einem Mono- oder Oligosaccharid-Derivat der Formel:

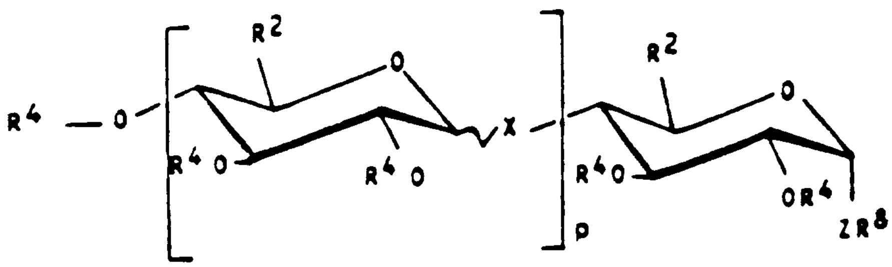

(XIV)

oder der Formel:

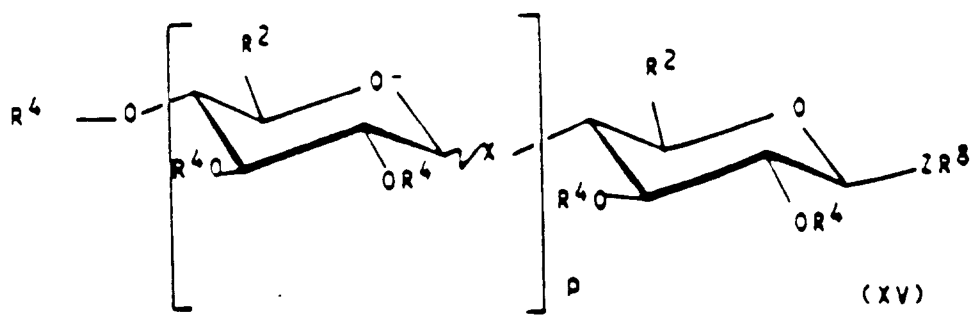

(XV)

umzusetzen, in welchen das oder die $R^2$, die identisch oder verschieden sein können, H, $CH_2OH$ oder $CH_2OR^4$ darstellen, $R^4$ H oder eine Schutzgruppe einer OH-Funktion darstellt, X S, O oder einen Rest darstellt, der den Formeln entspricht

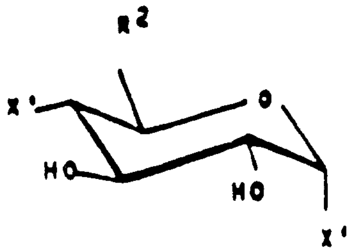 (IV) oder 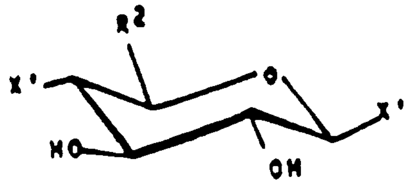 (V)

in welchen die X', die identisch oder verschieden sein können, O oder S darstellen, und $R^2$ die oben angegebene Bedeutung hat, p gleich 0 ist oder eine ganze Zahl von 1 bis 9 ist, Z eine Einfachbindung oder einen zweiwertigen Rest der Formel $-S-(CH_2)_m-$ oder $-S-(CH_2)_q-CH=CH-(CH_2)_r-$ darstellt, in welchen m, q und r so sind, daß $1 \leqq m \leqq 20$, $1 \leqq r \leqq 17$ $1 \leqq q \leqq 17$ und $q + r \leqq 18$ wobei S an $R^5$ gebunden ist, und $R^8$ eine Gruppe ist, die eine positive Ladung erzeugen kann.

**12.** Verfahren nach Anspruch 11, dadurch gekennzeichnet, daß $R^8$ ein Halogenatom ist.